# EUROPEAN PATENT APPLICATION

(11) **EP 4 535 897 A1**
(43) Date of publication of application: **09.04.2025**
(21) Application number: 23815090.8
(22) Date of filing: 26.05.2023
(51) Int. Cl.: H04W 72/04

(54) **DATA TRANSMISSION METHOD, APPARATUS AND SYSTEM**

(30) Priority: 02.06.2022 CN 202210621515
(71) Applicant: Huawei Technologies Co., Ltd., Shenzhen, Guangdong 518129 (CN)
(72) Inventor: PAN, Xiaodan, Shenzhen, Guangdong 518129 (CN); PENG, Wenjie, Shenzhen, Guangdong 518129 (CN)
(74) Representative: Isarpatent
(86) International application number: PCT/CN2023/096464
(87) International publication number: WO 2023/231907

(57) **Abstract**

Embodiments of this application provide a data transmission method, an apparatus, and a system. The method may include: A first device sends information about a transmission resource and first information to a second device, where the transmission resource includes a first resource and a second resource, the first resource is used by the second device to receive a first service from the first device, the second resource is used by a third device to receive the first service from the second device, the first information indicates that the second resource is used to transmit the first service, and the first service is a service of the third device. The first device sends data of the first service to the second device. The second device receives the data of the first service by using the first resource, and forwards the data of the first service to the third device by using the second resource. In this way, in this application, the second device can directly transmit the data of the first service of the third device by using the first resource and the second resource that are jointly configured by the first device, reducing a data transmission delay, and improving user experience.

## Description

This application claims priority to Chinese Patent Application No. 202210621515.8, filed with the China National Intellectual Property Administration on June 2, 2022 and entitled "DATA TRANSMISSION METHOD, APPARATUS, AND SYSTEM", which is incorporated herein by reference in its entirety.

### TECHNICAL FIELD

Embodiments of this application relate to the field of communication technologies, and more specifically, to a data transmission method, an apparatus, and a system.

### BACKGROUND

One user equipment (user equipment, UE) (for example, referred to as a remote UE) may receive data via another UE (for example, referred to as a relay UE). For example, a network device sends downlink data to the remote UE via the relay UE. The network device first sends the downlink data to the relay UE. Then, the relay UE requests a sidelink (sidelink, SL) resource from the network device, where the SL resource is used to forward the downlink data to the remote UE. After receiving the SL resource indicated by the network device, the relay UE forwards the downlink data to the remote UE by using the SL resource.

In the foregoing data transmission process, the downlink data of the remote UE waits in a buffer of the relay UE until an SL resource is available. This causes a long delay in transmission of the downlink data of the remote UE. Especially for a delay-sensitive service, the delay may greatly affect service performance.

### SUMMARY

This application provides a data transmission method, an apparatus, and a system, to implement short-delay transmission of downlink data of a remote UE.

According to a first aspect, a data transmission method is provided. The method may be performed by a device, or may be performed by a component (for example, a chip or a circuit) of a device. This is not limited. For ease of description, an example in which the method is performed by a first device is used below for description.

The method may include: The first device sends information about a transmission resource and first information to a second device, where the transmission resource includes a first resource and a second resource, the first resource is used by the second device to receive a first service from the first device, the second resource is used by a third device to receive the first service from the second device, the first information indicates that the second resource is used to transmit the first service, and the first service is a service of the third device. The first device sends data of the first service to the third device via the second device.

Based on the foregoing technical solution, the first device may jointly configure the transmission resource for the data of the first service of the third device. To be specific, the network device configures a resource used by the second device to receive the data from the first device and a resource used by the second device to send the data to the third device. For example, the first device is a network device. The network device configures a resource used by the second device to receive the data from the network device, and the network device configures a resource used by the second device to forward the data to the third device. In this way, the second device can directly transmit the data of the first service of the third device by using the first resource and the second resource that are jointly configured by the first device, reducing a data transmission delay, and improving user experience.

In some implementations, the method further includes: The first device receives service information of the first service from a core network device.

In some implementations, the method further includes: The first device determines the transmission resource based on the service information of the first service.

In some implementations, the first resource is a semi-persistent scheduling SPS resource. The method further includes: The first device sends first downlink control information to the second device, where the first downlink control information is used to activate the SPS resource, and a start moment of the SPS resource is determined based on the first downlink control information.

In some implementations, the second resource is a sidelink configured grant SL CG resource. The method further includes: The first device sends second downlink control information to the second device, where the second downlink control information is used to activate the SL CG resource, and a start moment of the SL CG resource is determined based on the second downlink control information.

Based on the foregoing technical solution, the network device may determine the transmission resource for the data of the first service based on the service information of the first service. This can improve resource utilization as much as possible, and avoid a case in which a redundant resource is configured or a resource is configured but is not used.

According to a second aspect, a data transmission method is provided. The method may be performed by a terminal device, or may be performed by a component (for example, a chip or a circuit) of a terminal device. This is not limited. For ease of description, an example in which the method is performed by a second terminal device is used below for description.

The method may include: A second device receives information about a transmission resource and first information from a first device, where the transmission resource includes a first resource and a second resource, the first resource is used by the second device to receive a first service from the first device, the second resource is used by a third device to receive the first service from the second device, the first information indicates that the second resource is used to transmit the first service, and the first service is a service of the third device. The second device receives data of the first service from the first device by using the first resource. The second device sends the data of the first service to the third device by using the second resource.

Based on the foregoing technical solution, when the first device sends data of a service of the third device to the third device via the second device, the second device may directly transmit the data by using the first resource and the second resource that are configured by the first device. Specifically, the second device receives the data of the service from the first device by using the first resource, and forwards the data of the service to the third device by using the second resource. Therefore, after receiving the data of the service from the first device, the second device does not need to request a resource used to forward the data of the service. This reduces a data transmission delay and improves user experience.

In some implementations, the first resource is a semi-persistent scheduling SPS resource. That the second device receives data of the first service from the first device by using the first resource includes: After receiving first downlink control information from the first device, the second device receives the data of the first service by using the SPS resource, where the first downlink control information is used to activate the SPS resource, and a start moment of the SPS resource is determined based on the first downlink control information.

In some implementations, the second resource is a sidelink configured grant SL CG resource. That the second device receives data of the first service from the first device by using the first resource includes: After receiving second downlink control information from the first device, the second device sends the data of the first service to the third device by using the SLCG resource, where the second downlink control information is used to activate the SLCG resource, and a start moment of the SLCG resource is determined based on the second downlink control information.

In some implementations, the first information includes a bearer identifier corresponding to the first service, and the bearer identifier corresponding to the first service indicates that the second resource is used to transmit the first service.

In some implementations, the bearer identifier corresponding to the first service includes an identifier of a data radio bearer DRB corresponding to the first service, or an identifier of a PC5 radio link control RLC bearer corresponding to a DRB corresponding to the first service.

In some implementations, the first information includes an identifier of the third device, and the identifier of the third device indicates the second device to transmit the first service to the third device by using the second resource.

Based on the foregoing technical solution, one second device may serve a plurality of third devices, so that the first device may further indicate, to the second device, that the second resource is used for transmission of a specific third device.

In some implementations, the first service is a periodically transmitted service, a period of the first resource is the same as a period of the first service, and/or a period of the second resource is the same as a period of the first service.

In some implementations, the period of the first resource is the same as the period of the second resource.

In some implementations, a bearer corresponding to the first service has a first correspondence with a first logical channel, and the first logical channel is a corresponding logical channel for transmitting the data of the first service between the second device and the first device.

For example, the bearer corresponding to the first service is the data radio bearer corresponding to the first service.

In some implementations, the data radio bearer corresponding to the first service has a second correspondence with a second logical channel, and the second logical channel is a corresponding logical channel for transmitting first data between the second device and the third device.

In some implementations, the first resource is greater than or equal to a resource required for transmitting the first data between the second device and the first device; and/or the second resource is greater than or equal to a resource required for transmitting the first data between the second device and the third device.

In some implementations, a time gap between a time domain start position of the first resource and a first moment is greater than or equal to a first threshold, and the first moment indicates a moment at which the first data arrives at the first device.

For example, the first threshold is related to the following delays: a delay in processing the data of the first service by the first device and a transmission delay in sending the data of the first service by the first device to the second device. For example, the first threshold is greater than or equal to a sum of the delay in processing the data of the first service by the first device and the transmission delay in sending the data of the first service by the first device to the second device.

In some implementations, a time gap between a time domain start position of the first resource and a time domain start position of the second resource is greater than or equal to a second threshold.

For example, the second threshold is related to the following delays: a delay in processing the data of the first service by the second device and a transmission delay in sending the data of the first service by the second device to the third device. For example, the second threshold is greater than or equal to a sum of the delay in processing the data of the first service by the second device and the transmission delay in sending the data of the first service by the second device to the third device.

In some implementations, the first resource is a semi-persistent scheduling SPS resource, and/or the second resource is a sidelink configured grant SL CG resource.

According to a third aspect, a communication apparatus is provided. The apparatus is configured to perform the method in any one of the possible implementations of the first aspect and the second aspect. Specifically, the apparatus may include a unit and/or a module, configured to perform the method in any one of the possible implementations of the first aspect and the second aspect, for example, a processing unit and/or a communication unit.

In an implementation, the apparatus is a device (for example, a network device or a terminal device). When the apparatus is the device, the communication unit may be a transceiver or an input/output interface, and the processing unit may be at least one processor. Optionally, the transceiver may be a transceiver circuit. Optionally, the input/output interface may be an input/output circuit.

In another implementation, the apparatus is a chip, a chip system, or a circuit used in a device (for example, a network device or a terminal device). When the apparatus is the chip, the chip system, or the circuit used in the device, the communication unit may be an input/output interface, an interface circuit, an output circuit, an input circuit, a pin, a related circuit, or the like on the chip, the chip system, or the circuit; and the processing unit may be at least one processor, a processing circuit, a logic circuit, or the like.

According to a fourth aspect, a communication apparatus is provided. The apparatus includes at least one processor, configured to execute a computer program or instructions stored in a memory, to perform the method in any one of the possible implementations of the first aspect and the second aspect. Optionally, the apparatus further includes the memory, configured to store the computer program or the instructions. Optionally, the apparatus further includes a communication interface, and the processor reads, through the communication interface, the computer program or the instructions stored in the memory.

In an implementation, the apparatus is a device (for example, a network device or a terminal device).

In another implementation, the apparatus is a chip, a chip system, or a circuit used in a device (for example, a network device or a terminal device).

According to a fifth aspect, this application provides a processor, configured to perform the method according to the foregoing aspects.

Operations such as sending and obtaining/receiving related to the processor may be understood as operations such as output and receiving or input of the processor, or operations such as sending and receiving performed by a radio frequency circuit and an antenna, unless otherwise specified, or provided that the operations do not contradict actual functions or internal logic of the operations in related descriptions. This is not limited in this application.

According to a sixth aspect, a computer-readable storage medium is provided. The computer-readable medium stores program code to be executed by a device, and the program code is used to perform the method in any one of the possible implementations of the first aspect and the second aspect.

According to a seventh aspect, a computer program product including instructions is provided. When the computer program product is run on a computer, the computer is enabled to perform the method in any one of the possible implementations of the first aspect and the second aspect.

According to an eighth aspect, a communication system is provided, including at least one of the foregoing first terminal device, second terminal device, and network device.

### BRIEF DESCRIPTION OF DRAWINGS

FIG. 1 is a diagram of a network architecture applicable to an embodiment of this application;
FIG. 2 is a diagram of a network architecture applicable to another embodiment of this application;
FIG. 3 is a diagram of SL communication;
FIG. 4 is a diagram of an architecture of a control plane protocol stack for SL radio resource control (radio resource control, RRC);
FIG. 5 is a diagram of dynamic scheduling by a network device;
FIG. 6 is a diagram of U2N relay;
(a) and (b) in FIG. 7 are a diagram of a protocol stack for L2 U2N relay;
FIG. 8 is a diagram of bearer multiplexing in L2 U2N relay;
FIG. 9 is a diagram of a format of a SRAP PDU;
FIG. 10 is a diagram of a dynamic grant in an SL communication scenario;
(a) and (b) in FIG. 11 are a diagram of a CG in an SL communication scenario;
FIG. 12 is a diagram in which a network device sends downlink data to a remote UE via a relay UE according to the conventional technology;
FIG. 13 is a diagram of a data transmission method 1300 according to an embodiment of this application;
FIG. 14 is a diagram of an association relationship between a first resource and a second resource in time domain;
FIG. 15 is a diagram of a data transmission method 1500 according to an embodiment of this application;
FIG. 16 is a diagram of a data transmission apparatus 1600 according to an embodiment of this application;
FIG. 17 is a diagram of another data transmission apparatus 1700 according to an embodiment of this application; and
FIG. 18 is a diagram of a chip system 1800 according to an embodiment of this application.

### DESCRIPTION OF EMBODIMENTS

The following describes technical solutions in embodiments of this application with reference to accompanying drawings.

The technical solutions provided in this application may be applied to various communication systems, for example, a 5th generation (5th generation, 5G) or new radio (new radio, NR) system, a long term evolution (long term evolution, LTE) system, an LTE frequency division duplex (frequency division duplex, FDD) system, and an LTE time division duplex (time division duplex, TDD) system. The technical solutions provided in this application may be further applied to a future communication system, for example, a 6th generation (6th generation, 6G) mobile communication system. The technical solutions provided in this application may be further applied to device-to-device (device-to-device, D2D) communication, vehicle-to-everything (vehicle-to-everything, V2X) communication, machine-to-machine (machine-to-machine, M2M) communication, machine type communication (machine type communication, MTC), an internet of things (internet of things, IoT) communication system, or another communication system.

A terminal device in embodiments of this application may also be referred to as a user equipment (user equipment, UE), an access terminal, a subscriber unit, a subscriber station, a mobile station, a remote station, a remote terminal, a mobile device, a user terminal, a terminal, a wireless communication device, a user agent, or a user apparatus.

The terminal device may be a device that provides a user with voice/data, for example, a handheld device or a vehicle-mounted device having a wireless connection function. Currently, some examples of the terminal may be a mobile phone (mobile phone), a tablet computer, a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self driving (self driving), a wireless terminal in remote surgery (remote medical surgery), a wireless terminal in a smart grid (smart grid), a wireless terminal in transportation safety (transportation safety), a wireless terminal in a smart city (smart city), a wireless terminal in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device or a computing device having a wireless communication function, another processing device or wearable device connected to a wireless modem, a terminal device in a 5G network, or a terminal device in a future evolved public land mobile network (public land mobile network, PLMN). This is not limited in embodiments of this application.

By way of example, and not limitation, in embodiments of this application, the terminal device may alternatively be a wearable device. The wearable device may also be referred to as a wearable intelligent device, and is a generic term for wearable devices that are developed through intelligent design on daily wearables by using wearable technologies, such as glasses, gloves, watches, clothing, and shoes. The wearable device is a portable device that can be directly worn on a body or integrated into clothes or an accessory of a user. The wearable device is not only a hardware device, but also implements a powerful function through software support, data exchange, and cloud interaction. In a broad sense, the wearable intelligent device includes a full-featured and large-sized device that can implement all or part of functions without depending on a smartphone, for example, a smartwatch or smart glasses, and a device that is dedicated to only one type of application function and needs to be used together with another device such as a smartphone, for example, various smart bands or smart jewelry for monitoring physical signs.

In embodiments of this application, an apparatus configured to implement a function of the terminal device may be a terminal device, or may be an apparatus capable of supporting the terminal device in implementing the function, for example, a chip system or a chip. The apparatus may be installed in the terminal device. In embodiments of this application, the chip system may include a chip, or may include a chip and another discrete component.

A network device in embodiments of this application may be a device configured to communicate with the terminal device. The network device may also be referred to as an access network device or a radio access network device. For example, the network device may be a base station. The network device in embodiments of this application may be a radio access network (radio access network, RAN) node (or device) that connects the terminal device to a wireless network. The base station may cover the following names in a broad sense, or may be replaced with the following names, for example, a NodeB (NodeB), an evolved NodeB (evolved NodeB, eNB), a next generation NodeB (next generation NodeB, gNB), a relay station, an access point, a transmitting and receiving point (transmitting and receiving point, TRP), a transmitting point (transmitting point, TP), a primary station, a secondary station, a multi-standard radio (motor slide retainer, MSR) node, a home base station, a network controller, an access node, a radio node, an access point (access point, AP), a transmission node, a transceiver node, a baseband unit (baseband unit, BBU), a remote radio unit (remote radio unit, RRU), an active antenna unit (active antenna unit, AAU), a radio-frequency head (remote radio head, RRH), a central unit (central unit, CU), a distributed unit (distributed unit, DU), and a positioning node. The base station may be a macro base station, a micro base station, a relay node, a donor node, an analogue, or a combination thereof. The base station may alternatively be a communication module, a modem, or a chip that is disposed in the foregoing device or apparatus. The base station may alternatively be a mobile switching center, a device that bears a base station function in D2D, V2X, and M2M communication, a network side device in a 6G network, a device that bears a base station function in a future communication system, or the like. The base station may support networks using a same access technology or different access technologies. A specific technology and a specific device form that are used by the network device are not limited in embodiments of this application.

The base station may be fastened or movable. For example, a helicopter or an uncrewed aerial vehicle may be configured as a mobile base station, and one or more cells may move based on a location of the mobile base station. In other examples, a helicopter or an uncrewed aerial vehicle may be configured as a device for communicating with another base station.

In some deployments, the network device mentioned in embodiments of this application may be a device including a CU or a DU, a device including a CU and a DU, or a device including a control plane CU node (a central unit-control plane (central unit-control plane, CU-CP)), a user plane CU node (a central unit-user plane (central unit-user plane, CU-UP)), and a DU node.

The network device and the terminal device may be deployed on the land, including an indoor device, an outdoor device, a handheld device, or a vehicle-mounted device; may be deployed on the water; or may be deployed on an airplane, a balloon, and a satellite in the air. Scenarios in which the network device and the terminal device are located are not limited in embodiments of this application.

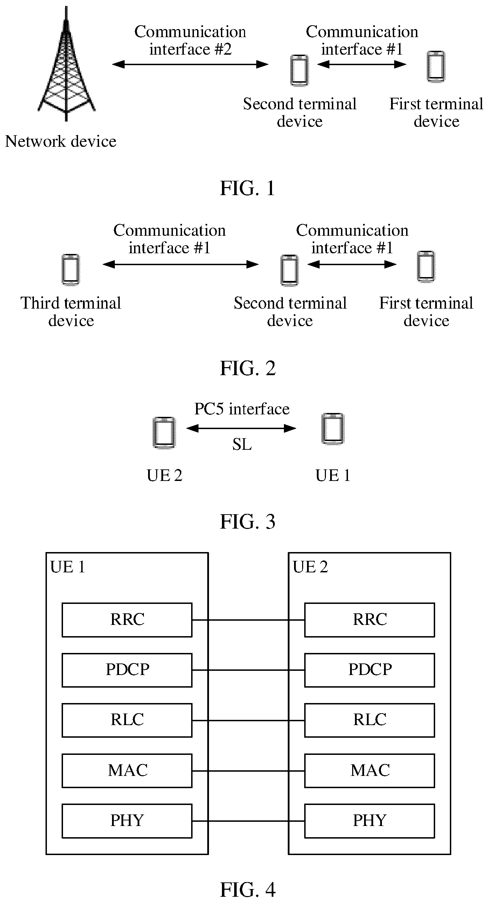

First, a network architecture applicable to this application is briefly described with reference to FIG. 1 and FIG. 2. Details are as follows.

FIG. 1 is a diagram of a network architecture applicable to an embodiment of this application.

As shown in FIG. 1, in an example, the network architecture may include a terminal device, for example, a first terminal device and a second terminal device in FIG. 1. The network architecture may further include a network device. The first terminal device may be referred to as a remote terminal device (remote UE), and the second terminal device may be referred to as a relay terminal device (relay UE). The first terminal device may communicate with the second terminal device through a communication interface #1. The second terminal device may communicate with the network device through a communication interface #2. The first terminal device may communicate with the network device via the second terminal device. For example, the architecture shown in FIG. 1 is used as an example. When sending data to the first terminal device, the network device may first send the data to the second terminal device, and then the second terminal device forwards the data to the first terminal device.

FIG. 2 is a diagram of a network architecture applicable to another embodiment of this application.

As shown in FIG. 2, in an example, the network architecture may include a plurality of terminal devices, for example, a first terminal device, a second terminal device, and a third terminal device in FIG. 2. The first terminal device may be referred to as a remote UE, the second terminal device may be referred to as a relay UE, and the third terminal device may be referred to as a transmit UE (Tx UE). The first terminal device may communicate with the second terminal device through a communication interface #1. The second terminal device may communicate with the third terminal device through a communication interface #1. For example, the architecture shown in FIG. 2 is used as an example. When sending data to the first terminal device, the third terminal device may first send the data to the second terminal device, and then the second terminal device forwards the data to the first terminal device.

In FIG. 1 and FIG. 2, in an example, the communication interface #1 may be a proximity-based services communication 5 (proximity-based services communication 5, PC5) interface, or may be a non-3rd generation partnership project (3rd generation partnership project, 3GPP) interface, for example, a private interface, a wireless fidelity (wireless fidelity, Wi-Fi) interface, a bluetooth interface, or a wired interface. This is not limited. In an example, the communication interface #2 may be a Uu interface. A Uu interface is an interface for communication between a UE and a network device, and correspondingly, a link between the UE and the network device may be referred to as a Uu link. It may be understood that the PC5 interface and the Uu interface are merely examples, and do not constitute any limitation on the protection scope of this application. The communication interface may alternatively have another name. Details are not described herein again.

It may be understood that the network architectures shown in FIG. 1 and FIG. 2 are merely examples for description, and a network architecture applicable to embodiments of this application is not limited thereto. For example, the technical solutions in embodiments of this application may be applied to any architecture in which one terminal device (for example, referred to as a remote UE) can communicate with another device (for example, a network device, or for another example, a terminal device) via another terminal device (for example, referred to as a relay UE). For another example, the foregoing architecture may further include another device, for example, a core network device and/or another terminal device. In an example, the core network device may include, for example, an access and mobility management function (access and mobility management function, AMF) network element, a session management function (session management function, SMF) network element, a user plane function (user plane function, UPF) network element, and a policy control function (policy control function, PCF) network element.

It may be further understood that FIG. 1 and FIG. 2 are mainly described by using the terminal devices as an example. This is not limited. Alternatively, the first terminal device and the second terminal device may be two modules on a same physical platform, and the two modules transmit data of a same service. For example, two communication modules are installed on one uncrewed aerial vehicle, and the two communication modules transmit data of a same service.

For ease of understanding of embodiments of this application, several basic concepts in embodiments of this application are briefly described.

It should be understood that the basic concepts described below are briefly described by using basic concepts specified in a current protocol as an example, but embodiments of this application are not limited to being applied only to a currently existing system. Therefore, names appearing when the currently existing system is used as an example for description are all functional descriptions, do not limit specific names, indicate only functions, and may be correspondingly expanded to another system, for example, a 4G system or a future communication system.

### 1. Sidelink

In a wireless communication system, UEs may perform data communication with each other via an operator network (for example, a base station), or UEs may directly communicate with each other without an operator network. An interface between the UEs may be referred to as a PC5 interface. A link between the UEs may be referred to as a sidelink (sidelink, SL), or a link between the UEs may be referred to as a PC5 link (PC5 link). In a possible application scenario, in V2X, each vehicle may be considered as a UE, and vehicles (that is, UEs) may communicate with each other through a PC5 interface rather than an operator network. In this way, a communication delay can be effectively reduced.

For consistency of description, in embodiments of this application, an example in which a link between UEs is denoted as an SL and a link between a UE and a network device is denoted as a Uu link is used for description. It may be understood that the SL and the Uu link are merely names for differentiation, and specific names of the SL and the Uu link do not limit the protection scope of this application. It may be further understood that the SL and the Uu link represent connection relationships between devices, and are logical concepts rather than physical entities.

FIG. 3 is a diagram of SL communication.

As shown in FIG. 3, an interface between a UE 1 and a UE 2 may be referred to as a PC5 interface, a direct link between the UE 1 and the UE 2 may be referred to as an SL, and the UE 1 and the UE 2 may directly communicate with each other.

FIG. 4 is a diagram of an architecture of a control plane protocol stack for SL radio resource control (radio resource control, RRC).

As shown in FIG. 4, the control plane protocol stack for SL RRC may include a physical (physical, PHY) layer, a media access control (media access control, MAC) layer, a radio link control (radio link control, RLC) layer, a packet data convergence protocol (packet data convergence protocol, PDCP) layer, and an RRC layer.

The PC5 interface may support communication modes such as broadcast, unicast, and multicast. This application mainly relates to the unicast communication mode. The following briefly describes unicast communication.

2. Unicast communication: A unicast connection is first established between two UEs. After the unicast connection is established, the two UEs may perform data communication based on an identifier determined through negotiation. Data may be encrypted, or may not be encrypted. Unicast communication is similar to data communication performed between a UE and a network device after an RRC connection is established. Compared with broadcast, unicast communication may be performed only between the two UEs that have established the unicast connection.

In unicast communication, when sending data, a UE may send a source identifier and a destination identifier along with the data, for example, a source layer-2 identifier (source layer-2 identifier) and a destination layer-2 identifier (destination layer-2 identifier), so that the data is transmitted to a correct receive end. The source identifier is used to identify a transmit end, and may be allocated by the transmit end UE. The destination identifier is used to identify the receive end, and may be an identifier allocated by a receive end UE to the unicast connection. The UEs communicate with each other through a PC5 interface.

### 3. Scheduling (scheduling)

Scheduling may be classified as downlink scheduling (downlink scheduling) and uplink scheduling (uplink scheduling). Brief descriptions are separately provided below.

### (1) Downlink scheduling

When needing to send data (for example, referred to as downlink data (DL data)) to a UE, a network device first needs to indicate, to the UE, a corresponding time-frequency resource for receiving the downlink data, so that the UE can correctly receive the downlink data sent by the network device. This process may be referred to as a downlink resource scheduling process of the network device, or may be referred to as downlink scheduling for short.

Currently, there are mainly two downlink scheduling manners: dynamic grant (dynamic grant, DG)-based scheduling and semi-persistent scheduling (semi-persistent scheduling, SPS).

Dynamic grant-based scheduling: The network device sends downlink control information (downlink control information, DCI) to the UE, where the DCI is used to indicate a resource allocated by the network device to receive the downlink data. The resource may also be referred to as a downlink grant (DL grant) resource or a downlink scheduling resource.

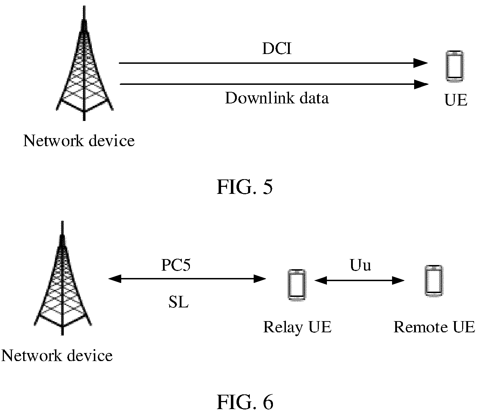

FIG. 5 is a diagram of dynamic scheduling by the network device.

As shown in FIG. 5, the network device may first send the DCI to the UE, where the DCI indicates the resource used to receive the downlink data. Then, the network device sends the downlink data to the UE. For example, the network device may scramble the DCI by using a cell radio network temporary identifier (cell radio network temporary identifier, C-RNTI) of the UE, and send the DCI to the UE on a physical downlink control channel (physical downlink control channel, PDCCH). After detecting and successfully descrambling the DCI, the UE may receive the downlink data on a physical downlink shared channel (physical downlink shared channel, PDSCH) based on the resource indicated in the DCI (that is, the resource that is allocated by the network device to the UE and that is used to receive the downlink data).

Semi-persistent scheduling: The network device first sends information about an allocated periodic downlink scheduling resource to the UE by using RRC signaling, and then activates or deactivates the periodic resource by using the DCI when necessary. The configured periodic resource can be used to receive data only after being activated.

### (2) Uplink scheduling

When a UE needs to send data (for example, referred to as uplink data (UL data)) to a network device, the UE first needs to learn of a time-frequency resource for sending the uplink data, so that the UE can send the uplink data to the network device. This process may be referred to as an uplink resource scheduling process, or may be referred to as uplink scheduling for short.

Currently, there are mainly two uplink scheduling manners: dynamic indication and a configured grant.

Dynamic indication: For example, the UE first reports, to the network device by using a buffer status report (buffer status report, BSR), how much data currently needs to be sent in one or more logical channel groups, and requests the network device to allocate a radio resource (for example, a time-frequency resource). The network device dynamically indicates an available uplink resource to the UE by using DCI based on the information reported by the UE.

Configured grant (configured grant, CG): There are two CG manners: a CG type 1 (CG type 1) and a CG type 2. In the CG type 1, the network device indicates a periodic uplink resource to the UE by using RRC signaling. In the CG type 2, the network device indicates a periodic uplink resource to the UE by using RRC signaling, and activates or deactivates the uplink resource by using the DCI.

### 4. Logical channel prioritization (logical channel prioritization, LCP) process

For one UE, there may be a plurality of services or a plurality of logical channels that need transmission. At a MAC layer, the UE may multiplex and transmit data on the plurality of logical channels based on an uplink resource allocated by a network device. A process of multiplexing and transmitting the data on the plurality of logical channels may be referred to as an LCP process.

In the LCP process, data on one or more logical channels may be multiplexed to a same MAC protocol data unit (protocol data unit, PDU) based on a priority principle configured by the network device and a size of an allocated transmission resource. The MAC PDU is to be transmitted on the allocated transmission resource. The LCP process generally complies with the following two principles. (1) The priority principle: A high-priority logical channel is scheduled more frequently. (2) Fairness: A low-priority logical channel can be scheduled.

### 5. Radio bearer (radio bearer, RB)

A radio bearer is a general term of a series of protocol entities and configurations allocated by a network device to a UE, and is a service provided by a layer 2 for transmitting user data between the UE and the network device. The radio bearer includes a PDCP protocol entity (or referred to as a PDCP layer), an RLC protocol entity (or referred to as an RLC layer), a MAC protocol entity (or referred to as a MAC layer), a PHY entity (or referred to as a PHY), and the like.

The radio bearer may be classified as a data radio bearer (data radio bearer, DRB) and a signaling radio bearer (signalling radio bearer, SRB). The DRB is used to carry data, and the SRB is used to carry signaling or a message. In an SL communication scenario, a radio bearer corresponding to communication between UEs is referred to as a sidelink radio bearer (sidelink radio bearer, SLRB). Similarly, the SL RB includes a sidelink data radio bearer (sidelink data radio bearer, SL DRB) and a sidelink signaling radio bearer (sidelink signalling radio bearer, SL SRB). In a signaling design of a protocol, an RB configuration usually includes a configuration above the PDCP layer, a protocol entity below the RLC layer is referred to as an RLC bearer, and a corresponding configuration is provided in an RLC bearer configuration.

### 6. RLC bearer (RLC bearer)

An RLC bearer is a protocol entity and a configuration below an RLC layer, is a lower-layer part corresponding to an RB, and includes the RLC layer and a series of resources such as a logical channel. One RLC bearer is associated with one logical channel at a MAC layer. One RLC bearer is associated with one PDCP layer, that is, one RLC serves one RB. In SL communication, an RLC bearer on an SL may also be referred to as a sidelink RLC bearer (sidelink RLC bearer).

### 7. UE-to-network relay (UE-to-network relay, U2N relay)

U2N relay may also be referred to as SL U2N relay, and may be an architecture in which a UE provides a network access service for a UE. In a U2N relay scenario, one UE accesses a network via another UE through unicast communication, so that network coverage is enhanced. In the U2N relay scenario, a node that performs a relay function may be referred to as a relay UE (relay UE), and a node that accesses the network via the relay UE may be referred to as a remote UE (remote UE). It may be understood that the remote UE and the relay UE are merely names for differentiation, and names of the remote UE and the relay UE do not limit the protection scope of embodiments of this application. For example, the remote UE and the relay UE may also be respectively referred to as a first device and a second device, may be respectively referred to as a first node and a second node, or may be respectively referred to as a first module and a second module. For consistency, the following uses the remote UE and the relay UE for description.

FIG. 6 is a diagram of U2N relay.

As shown in FIG. 6, the remote UE may communicate with a network device through cooperation with the relay UE. The remote UE communicates with the relay UE through an SL, and a corresponding interface may be referred to as PC5. The relay UE is directly connected to the network device, that is, communicates with the network device through a Uu interface.

It may be understood that one relay UE may provide a relay service for one remote UE, or may provide a relay service for a plurality of remote UEs. This is not limited. One remote UE may access the network through a one-hop path (that is, via one relay UE), or may access the network through a multi-hop path (that is, via a plurality of relay UEs). This is not limited.

A U2N relay technology mainly includes two designs: layer-2 (layer-2, L2) U2N relay and layer-3 (layer-3, L3) U2N relay. The following uses L2 U2N relay as an example to describe a user plane protocol stack and a control plane protocol stack used during data transmission.

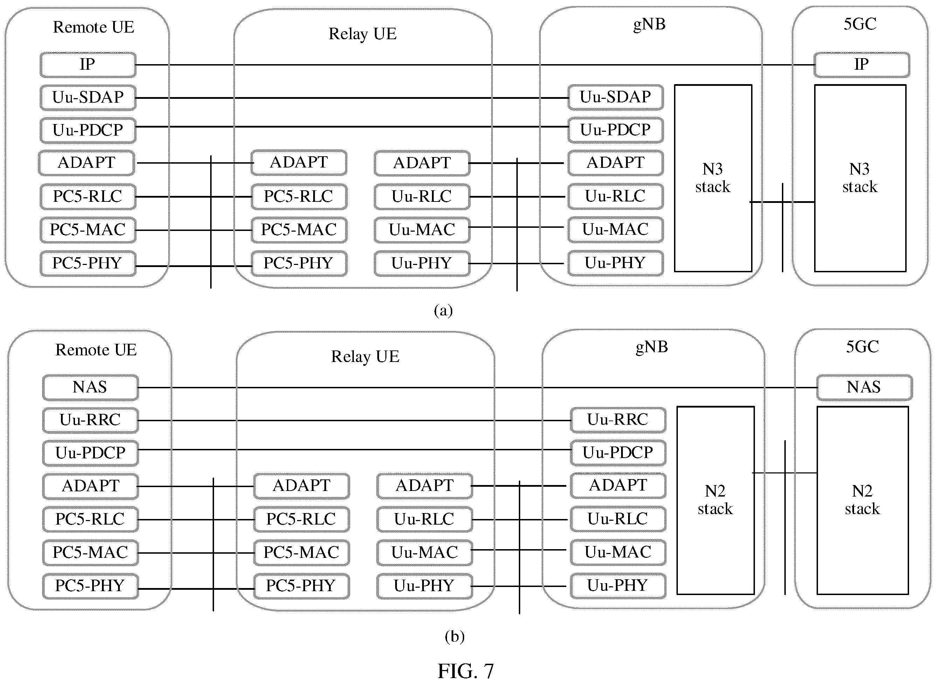

(a) and (b) in FIG. 7 are a diagram of a protocol stack for L2 U2N relay.

(a) in FIG. 7 is a diagram of a user plane protocol stack for L2 U2N relay (that is, a user plane protocol stack used when the remote UE establishes a connection to the network device via the relay UE for data transmission). (b) in FIG. 7 is a diagram of a control plane protocol stack for L2 U2N relay (that is, a control plane protocol stack used when the remote UE establishes the connection to the network device via the relay UE for data transmission).

As shown in (a) in FIG. 7, the user plane protocol stack for L2 U2N relay may include a PHY layer (for example, PC5-PHY and Uu-PHY shown in (a) in FIG. 7), a MAC layer (for example, PC5-MAC and Uu-MAC shown in (a) in FIG. 7), an RLC layer (for example, PC5-RLC and Uu-RLC shown in (a) in FIG. 7), an adaptation (adapt) layer (the adaptation layer may also be referred to as a sidelink relay adaptation protocol (sidelink relay adaptation protocol, SRAP) layer), a PDCP layer (for example, Uu-PDCP shown in (a) in FIG. 7), a SDAP layer (for example, Uu-SDAP shown in (a) in FIG. 7), and an internet protocol (Internet Protocol, IP) layer.

As shown in (b) in FIG. 7, the control plane protocol stack for L2 U2N relay may include a PHY layer (for example, PC5-PHY and Uu-PHY shown in (b) in FIG. 7), a MAC layer (for example, PC5-MAC and Uu-MAC shown in (b) in FIG. 7), an RLC layer (for example, PC5-RLC and Uu-RLC shown in (b) in FIG. 7), an adapt layer, a PDCP layer (for example, Uu-PDCP shown in (b) in FIG. 7), an RRC layer (for example, Uu-RRC shown in (a) in FIG. 7), and a non-access stadium (non-access stadium, NAS).

As shown in FIG. 7, a data packet of the remote UE is relayed and forwarded below a PDCP layer of the relay UE. To be specific, the relay UE maintains a relay RLC bearer, including an RLC layer (for example, SL-RLC and Uu-RLC in FIG. 7), a MAC layer (for example, SL-MAC and Uu-MAC in FIG. 7), and a PHY layer (for example, SL-PHY and Uu-PHY in FIG. 7). There is an end-to-end PDCP layer, an end-to-end SDAP layer, and an end-to-end RRC layer but no end-to-end RLC layer, end-to-end MAC layer, and en-to-end PHY layer between the remote UE and the network device. In a U2N relay communication scenario, an RLC bearer between the network device and the relay UE may be referred to as a Uu RLC bearer or a Uu relay RLC channel, and an RLC bearer between the relay UE and the remote UE is a PC5 relay RLC bearer or a PC5 relay RLC channel.

The SRAP layer (or referred to as the adaptation layer) is between the RLC layer and the PDCP layer. Refer to FIG. 7. Main functions of the SRAP layer include multiplexing and demultiplexing of bearers, that is, supporting multiplexing of different bearers to one bearer, or splitting one bearer into different bearers. For example, in a downlink direction, a SRAP layer of the network device may multiplex incoming upper-layer data of one or more remote UEs to one RLC bearer. In other words, one Uu RLC bearer on a Uu link may include data of one or more remote UEs (or radio bearers of one or more remote UEs). A mapping relationship between a radio bearer and an RLC bearer of a remote UE may be configured by the network device. The network device may further configure a mapping relationship between a radio bearer of a remote UE and a PC5 relay RLC bearer of the remote UE. Therefore, a remote UE identifier (which may also be referred to as a local identifier (local ID)) and a radio bearer identifier (RB ID, for example, a DRB ID or an SRB ID) are added to a packet header of a SRAP PDU data packet. In this way, after receiving downlink data sent by the network device, a SRAP layer of the relay UE may correctly map data on a Uu relay RLC bearer to different PC5 relay RLC bearers of the corresponding remote UE based on the local ID and the RB ID that are in the packet header of the SRAP PDU data packet, to split multiplexed data. Similarly, in an uplink direction, the SRAP layer of the relay UE may multiplex data on PC5 relay RLC bearers of one or more remote UEs to one Uu RLC bearer, to implement bearer multiplexing. After the network device receives the data on the Uu RLC bearer, the SRAP layer of the network device demultiplexes the data, that is, delivers the data to a corresponding PDCP layer based on the local ID and the DRB ID that are carried in the data.

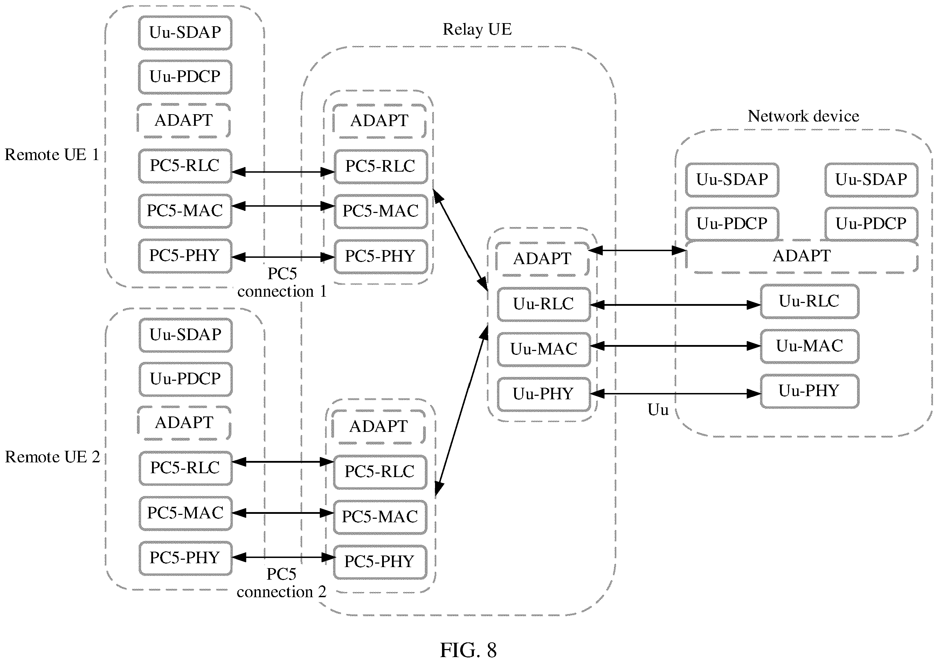

FIG. 8 is a diagram of bearer multiplexing in L2 U2N relay.

As shown in FIG. 8, a remote UE 1 and a remote UE 2 may reuse a Uu RLC bearer of the relay UE to communicate with the network device. There is an end-to-end SDAP layer, an end-to-end PDCP layer, and an end-to-end bearer configuration between the network device and each of the remote UE 1 and the remote UE 2. Downlink transmission is used as an example to describe a relay forwarding process of the relay UE. The network device sends downlink data to the remote UE. First, the downlink data of the remote UE is delivered to the SRAP layer of the network device by using a SDAP and a PDCP. The network device adds a local ID of the remote UE and a DRB ID to a corresponding data packet based on an upper-layer entity corresponding to the data, then delivers the data packet to a lower-layer protocol layer, and performs multiplexing on the Uu RLC bearer. After receiving the data from the Uu RLC bearer, the SRAP layer of the relay UE determines, based on the local ID of the remote UE in the data packet, a PC5 connection (connection) corresponding to the data packet. Then, the relay UE delivers the data to a PC5 relay RLC bearer of the correct remote UE based on the local ID of the remote UE and the DRB ID in the data packet, and a mapping relationship (that is, a mapping relationship between a PC5 relay RLC bearer, a DRB ID, and a local ID) configured by the network device. Finally, the SRAP layer of the remote UE delivers the data to a correct Uu PDCP layer and a correct Uu SDAP layer based on the DRB ID carried in the data.

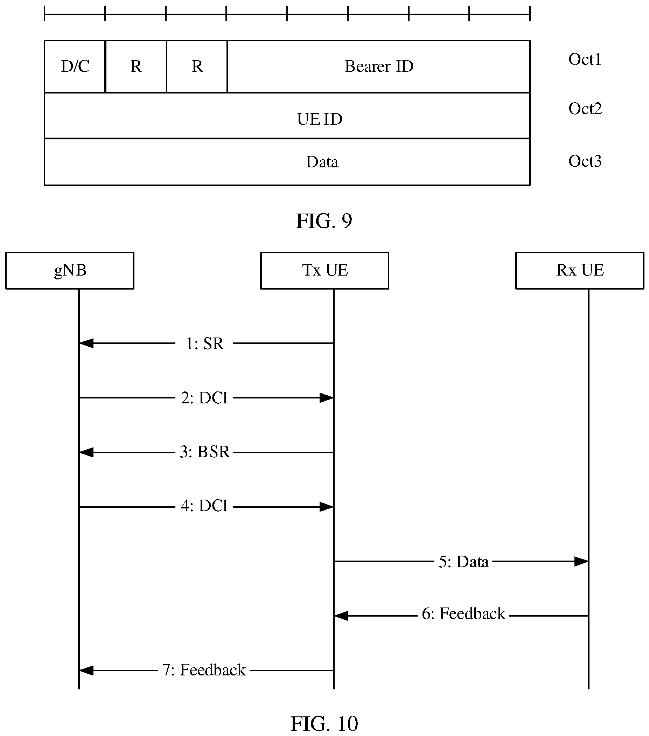

FIG. 9 is a diagram of a format of a SRAP PDU.

As shown in FIG. 9, the SRAP PDU includes data, and further includes a remote UE identifier (for example, a UE ID in FIG. 9) and a radio bearer identifier (for example, a bearer ID in FIG. 9).

### 8. SL scheduling

In an SL communication scenario, two transmission resource scheduling modes are introduced in a protocol: a mode 1 (mode 1) and a mode 2 (mode 2). In the mode 1, a network device indicates an SL resource to a UE by using DCI. In the mode 2, the UE autonomously selects an SL through listening or random selection. Embodiments of this application mainly focus on the mode of scheduling by the network device. Therefore, the following describes the mode 1.

The mode 1 mainly includes three resource allocation modes.
(1) Dynamic grant: The network device dynamically indicates the SL resource to the UE by using the DCI.
(2) CG type 1: The network device configures a semi-static periodic transmission resource for the UE, and indicates the configured transmission resource to the UE through RRC.
(3) CG type 2: The network device configures a semi-static periodic transmission resource for the UE, indicates the configured transmission resource to the UE through RRC, and indicates, by using the DCI, the UE to activate or deactivate the configured resource.

FIG. 10 is a diagram of the dynamic grant in the SL communication scenario.

As shown in FIG. 10, dynamic grant-based resource scheduling and data transmission in the SL communication scenario include the following steps.

Step 1: A transmit end UE (denoted as a Tx UE) sends a scheduling request (scheduling request, SR) to a gNB.

The SR is used to request a resource required by the Tx UE to report a BSR (or referred to as an SL BSR). The Tx UE may be a relay UE.

Step 2: The gNB sends DCI to the Tx UE.

The DCI is used to indicate the resource required by the Tx UE to report the BSR.

Step 3: The Tx UE sends the BSR to the gNB.

When the Tx UE needs to send data to a receive end UE (denoted as an Rx UE, where the Rx UE may be a remote UE), the Tx UE may first report a buffer size for each logical channel group to the network device by using the BSR, that is, notify the network device of an amount of data to be sent by the Tx UE to the Rx UE, so that the network device determines a quantity of SL resources that need to be allocated to the Tx UE.

A resource used for the BSR sent by the Tx UE to the gNB may be the resource received by the Tx UE in step 2. It may be understood that if the Tx UE has the resource for reporting the BSR, the Tx UE may directly use the resource for reporting, and step 1 and step 2 do not need to be performed.

Step 4: The gNB sends DCI to the Tx UE.

The DCI is used to indicate an SL resource. The Tx UE receives and descrambles the DCI to obtain, from the DCI, the SL resource allocated by the gNB.

Step 5: The Tx UE sends data to the Rx UE.

The Tx UE sends the data to the Rx UE based on the allocated SL resource. Optionally, the Tx UE further sends sidelink control information (sidelink control information, SCI) to the Rx. The SCI includes two parts, and is referred to as two-stage SCI (two-stage SCI), including 1^{st} stage SCI (1^{st} stage SCI) and 2^{nd} stage SCI (2^{nd} stage SCI). The 1^{st} stage SCI is carried on a physical sidelink control channel (physical sidelink control channel, PSCCH). The 2^{nd} stage SCI and the data are carried on a physical sidelink shared channel (physical sidelink shared channel, PSSCH). The 1^{st} stage SCI may indicate scheduling resource information of the 2^{nd} stage SCI and the data on the PSSCH and related control information required for decoding the PSSCH. In other words, the 1^{st} stage SCI may flexibly indicate a format and an occupied resource size of the 2^{nd} stage SCI. The 2^{nd} stage SCI may indicate a parameter required for data transmission on the PSSCH, for example, hybrid automatic repeat request (hybrid automatic repeat request, HARQ) related information, a channel state information (channel state information, CSI) related parameter, an L1 source ID, an L1 destination ID, location information, and a communication distance.

Step 6: The Rx UE sends a feedback (feedback) to the Tx UE.

After receiving the data sent by the Tx UE, the Rx UE may send the feedback (for example, an SL HARQ) to the Tx UE on a physical sidelink feedback channel (physical sidelink feedback channel, PSFCH), to indicate whether the data is successfully received.

A frequency domain resource used for the feedback (for example, the SL HARQ) sent by the Rx UE to the Tx UE may be configured by the gNB. For example, the gNB indicates, in a bitmap (bitmap) manner, a location of a frequency domain resource that can be used for the PSFCH in a resource pool, and the resource pool is a resource available for current SL communication. A PSSCH resource is in one-to-one correspondence with a location of a frequency domain resource for a PSFCH. In other words, if the gNB configures a PSCCH resource for a UE, a frequency domain resource used by the UE for sending on the PSFCH is also determined. For example, a time domain resource for the SL HARQ is determined by parameters sl-PSFCH-Period and sl-MinTimeGapPSFCH that are configured by the gNB. sl-PSFCH-Period is a period of a PSFCH resource. In an example, sl-PSFCH-Period={sl0, s*l*1, s*l*2, s*l*4}, in a unit of a slot. sl-PSFCH-Period=sl0 indicates that SL HARQ feedback is disabled (disable), and s*l*-PSFCH-Period=s*l*2 indicates that PSFCH resources are configured every two slots. sl-MinTimeGapPSFCH is a minimum time gap between a PSFCH resource location and a last slot occupied by data on the PSSCH. In an example, s*l*-MinTimeGapPSFCH={s*l*2, sl3}. In a process of transmitting SL data, the UE may determine the PSFCH resource location based on the foregoing two parameters (sl-PSFCH-Period and sl-MinTimeGapPSFCH), and perform detection and reception.

Step 7: The Tx UE sends the feedback to the gNB.

After receiving the feedback (for example, the SL HARQ) from the Rx UE, the Tx UE may forward the feedback to the gNB, to notify the gNB of a data transmission status on a sidelink, so that the gNB determines whether to continue to allocate a resource for data retransmission.

The foregoing describes, with reference to FIG. 10, related steps of dynamic grant-based resource scheduling and data transmission in the SL communication scenario. It may be understood that the foregoing is an example for description, and does not limit the protection scope of embodiments of this application.

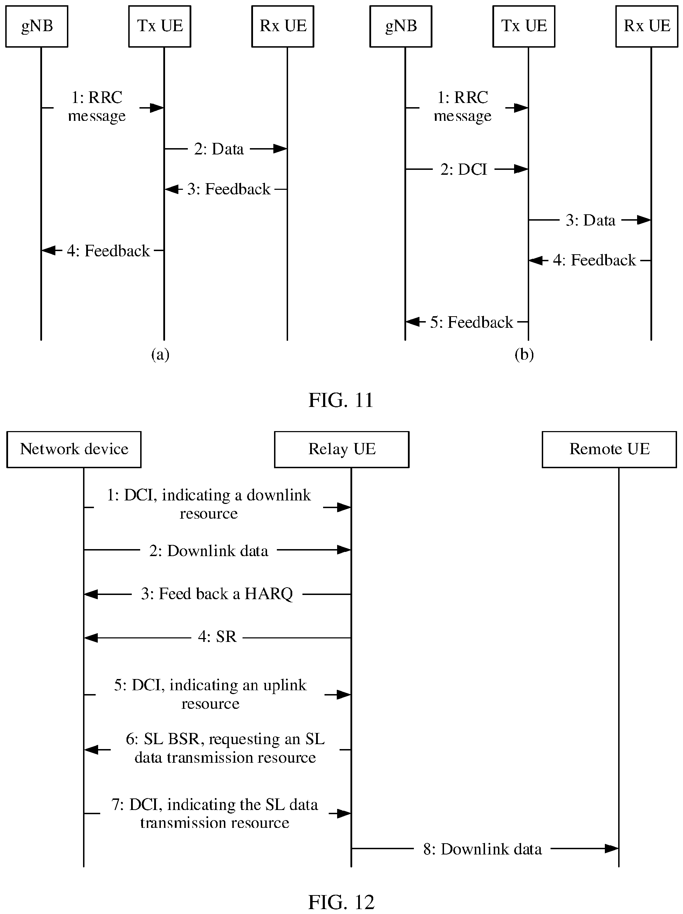

(a) and (b) in FIG. 11 are a diagram of the CG in the SL communication scenario.

(a) in FIG. 11 is a diagram of resource scheduling and data transmission of the CG type 1 in the SL communication scenario. (b) in FIG. 11 is a diagram of resource scheduling and data transmission of the CG type 2 in the SL communication scenario.

As shown in (a) in FIG. 11, resource scheduling and data transmission of the CG type 1 in the SL communication scenario may include the following steps.

Step 1: A gNB sends an RRC message to a Tx UE.

The gNB configures an SL CG for the Tx UE, and indicates the configured SL CG to the Tx UE by using RRC signaling. The SL CG may include an SL resource and a PUCCH resource used by the Tx UE to perform SL HARQ feedback.

Step 2: The Tx UE sends data to an Rx UE.

The Tx UE sends the data to the Rx UE on a PSSCH based on the SL CG. Optionally, the Tx UE further sends SCI to the Rx.

Step 3: The Rx UE sends a feedback to the Tx UE.

After receiving the data sent by the Tx UE, the Rx UE may send the feedback (for example, an SL HARQ) to the Tx UE on a PSFCH, to indicate whether the data is successfully received.

Step 4: The Tx UE sends the feedback to the gNB.

After receiving the feedback (for example, the SL HARQ) from the Rx UE, the Tx UE may forward the feedback to the gNB on a PUCCH configured in the SL CG, to notify the gNB of a data transmission status on an SL, so that the gNB determines whether to continue to allocate a resource for data retransmission.

As shown in (b) in FIG. 11, resource scheduling and data transmission of the CG type 2 in the SL communication scenario may include the following steps.

Step 1: A gNB sends an RRC message to a Tx UE.

Step 2: The gNB sends DCI to the Tx UE.

The DCI is used to activate an SL CG resource.

Step 3: The Tx UE sends data to an Rx UE.

Step 4: The Rx UE sends a feedback to the Tx UE.

Step 5: The Tx UE sends the feedback to the gNB.

Step 1 and steps 3 to 5 may be similar to steps 1 to 4 in (a) in FIG. 11, and details are not described herein again.

The foregoing describes, with reference to FIG. 11, related steps of CG-based resource scheduling and data transmission in the SL communication scenario. It may be understood that the foregoing is an example for description, and does not limit the protection scope of embodiments of this application.

The following describes, with reference to FIG. 12, a procedure in the conventional technology in which a network device sends downlink data to a remote UE via a relay UE.

FIG. 12 is a diagram in which the network device sends the downlink data to the remote UE via the relay UE according to the conventional technology.

As shown in FIG. 12, according to the conventional technology, that the network device sends the downlink data to the remote UE via the relay UE may include the following steps.

Step 1: The network device sends DCI to the relay UE, to indicate a downlink resource.

Optionally, the DCI may further indicate a resource used by the relay UE to feed back a HARQ.

Step 2: The network device sends the downlink data to the relay UE.

The network device sends the downlink data of the remote UE to the relay UE on the downlink resource indicated in step 1, so that the relay UE forwards the downlink data to the remote UE. Correspondingly, the relay UE receives the downlink data by using the downlink resource learned in step 1.

Step 3: The relay UE feeds back the HARQ to the network device.

If the DCI in step 1 further indicates a resource used by the relay UE to feed back the HARQ, the relay UE feeds back the HARQ to the network device on the resource in step 3, to notify the network device whether the downlink data is successfully received.

If a physical layer of the relay UE successfully receives the downlink data, the relay UE feeds back a HARQ acknowledgment (acknowledge, ACK) to the network device, to indicate that the downlink data is successfully received.

Step 4: The relay UE sends an SR to the network device.

After receiving the downlink data of the remote UE, the relay UE processes the downlink data by using a protocol stack, and delivers the downlink data to a SRAP layer. The SRAP layer recognizes, based on information in a packet header of a data packet and SRAP configuration information of the network device, that the data packet needs to be forwarded to a corresponding remote UE. If the relay UE has no available SL resource, the relay UE requests, by using an SL BSR, the network device to allocate an SL resource. Specifically, the relay UE first sends the SR to the network device, to notify the network device that uplink data needs to be transmitted. The network device allocates an uplink resource to the relay UE based on the SR of the relay UE, so that the relay UE may send the SL BSR to the network device by using the uplink resource, to request the network device to allocate the SL resource. It may be understood that if the relay UE currently has an available uplink resource, steps 4 and 5 may not be performed, and step 6 is directly performed, that is, the relay UE sends the SL BSR to the network device by using the available uplink resource.

Step 5: The network device sends DCI to the relay UE, where the DCI indicates the uplink resource.

After receiving the SR sent by the relay UE, the network device allocates, to the relay UE, the uplink resource that can be used to send the SL BSR, and indicates the allocated uplink transmission resource to the relay UE by using the DCI.

Step 6: The relay UE sends the SL BSR to the network device, to request an SL data transmission resource.

Step 7: The network device sends DCI to the relay UE, where the DCI indicates the SL data transmission resource.

Optionally, the DCI may further indicate a PUCCH resource used by the relay UE to perform SL HARQ feedback.

Step 8: The relay UE sends the downlink data to the remote UE.

The relay UE forwards the received downlink data of the remote UE to the remote UE by using the SL data transmission resource indicated in step 7.

Optionally, the relay UE feeds back an SL HARQ to the remote UE. After receiving the downlink data, the remote UE may further feed back the SL HARQ to the relay UE, to notify the relay UE whether the remote UE successfully receives the data.

Optionally, the relay UE feeds back the SL HARQ to the network device, to notify the network device whether the remote UE successfully receives the data.

It can be learned from the foregoing processing procedure that when the remote UE receives, via the relay UE, the downlink data delivered by the network device, a transmission process is divided into two steps. First, the network device sends the downlink data of the remote UE to the relay UE. Then, the relay UE requests the SL resource from the network device, to forward the downlink data to the remote UE. In this process, when receiving the downlink data of the remote UE, the relay UE may not be able to immediately forward the downlink data, but needs to request, from the network device through steps 3 to 6, the SL resource required for forwarding the downlink data. In this process, the downlink data of the remote UE waits in a buffer of the relay UE until there is an available SL resource. This causes a long delay in transmission of the downlink data of the remote UE. Especially for a delay-sensitive service, the delay may greatly affect service performance.

In view of this, this application provides a solution, in which a data transmission resource is jointly configured, so that a problem of low efficiency in a scheduling and transmission process for downlink data of a remote UE in a U2N relay communication scenario is resolved, and duration for which the downlink data of the remote UE waits in a buffer of a relay UE because there is no available SL resource is avoided or reduced, to meet a requirement of a delay-sensitive service.

It may be understood that the term "and/or" in this specification describes only an association relationship for describing associated objects and represents that three relationships may exist. For example, A and/or B may represent the following three cases: Only A exists, both A and B exist, and only B exists. In addition, the character "/" in this specification generally indicates an "or" relationship between the associated objects.

The foregoing briefly describes the terms related in this application, and details are not described in the following embodiments. With reference to the accompanying drawings, the following describes in detail a method provided in embodiments of this application. Embodiments provided in this application may be applied to the network architecture shown in FIG. 1 or FIG. 2. This is not limited.

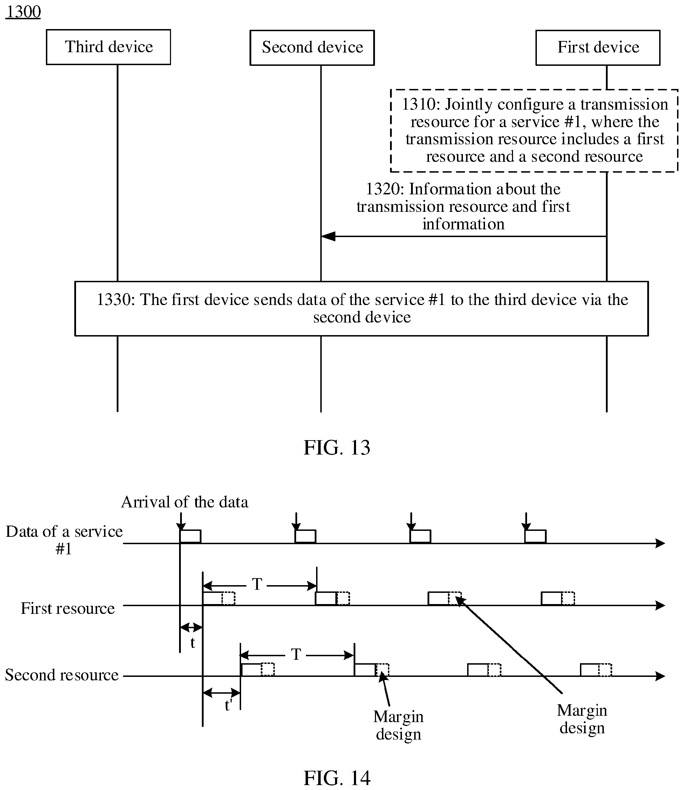

FIG. 13 is a diagram of a data transmission method 1300 according to an embodiment of this application. The method 1300 may include the following steps.

Optionally, the method 1300 includes step 1310.

1310: A first device jointly configures a transmission resource for a service #1, where the transmission resource includes a first resource and a second resource.

It may be understood that, that the first device jointly configures the transmission resource for the service #1 (an example of a first service) may be replaced with that the first device determines the transmission resource for the service #1.

The service #1 is a service of a third device. The service #1 may represent one service, or may represent a plurality of services. This is not limited.

In this embodiment of this application, the third device may be a remote UE, a second device may be a relay UE, and the first device may be a network device or a terminal device, as shown in the architecture shown in FIG. 1 or FIG. 2.

The first resource is used by the second device to receive the service #1 from the first device. In other words, the second device may receive data of the service #1 from the first device by using the first resource. For example, if the first device is the network device, the first resource is an SPS resource. For another example, if the first device is the terminal device, the first resource is an SL CG resource. For a possible manner for configuring the SL CG resource and the SPS resource, refer to the foregoing descriptions in the foregoing terminology explanation part. Details are not described herein again.

The second resource is used by the second device to send the service #1 to the third device. In other words, the second device may send the data of the service #1 to the third device by using the second resource. In an example, the second resource may be, for example, a CG resource (for example, the second resource is an SL CG resource). In this example, the first device may configure the CG resource for the service #1, where the CG resource is used to transmit the data of the service #1 between the second device and the third device. For a possible manner for configuring the CG resource, refer to the descriptions in the foregoing terminology explanation part. Details are not described herein again.

Optionally, the first resource and the second resource that are jointly configured by the first device for the service #1 are periodic resources. In this way, signaling overheads and a delay that are caused by requesting a resource each time the data of the service #1 is transmitted can be reduced. In a possible implementation, the first device configures the periodic first resource and the periodic second resource for the service #1 based on information related to the service #1. For example, the information related to the service #1 may include, for example, at least one piece of the following information: a period of the service #1, a data arrival time of the service #1, and a maximum data burst volume of the service #1.

1320: The first device sends information about the transmission resource and first information to the second device.

The first information indicates that the second resource is used to transmit the service #1. In other words, the first information indicates that the second resource is used to transmit the data of the service #1. For example, if the service #1 is an ultra-reliable and low latency communication (ultra-reliable and low latency communication, URLLC) service, the first information indicates that the second resource is used to transmit data of the URLLC service.

Optionally, the first information includes a bearer identifier corresponding to the service #1. Based on this, the bearer identifier corresponding to the first service indicates that the second resource is used to transmit the service #1.

The bearer identifier corresponding to the service #1 may be, for example, an identifier of a DRB corresponding to the service #1. Alternatively, the bearer identifier corresponding to the service #1 may be, for example, an identifier of an RLC bearer corresponding to a DRB corresponding to the service #1. As described in the foregoing terminology description part, a DRB of the relay UE is mapped to a PC5 relay RLC bearer on a PC5 interface. Therefore, to use the configured resource for the service #1 of the third device, the identifier of the PC5 relay RLC bearer corresponding to the DRB corresponding to the service #1 may be indicated, or the identifier of the DRB corresponding to the service #1 may be directly indicated.

Optionally, the first information further includes information about the third device, for example, an identifier of the third device. The information about the third device, for example, the identifier of the third device, may indicate the second device to transmit the service #1 to the third device by using the second resource. One second device may serve a plurality of third devices, so that the first device may further indicate, to the second device, that the second resource is used for transmission of a specific third device.

The information about the third device is, for example, any one piece of the following information: a destination layer-2 identifier, the identifier of the third device (for example, a local ID), or a C-RNTI. The local ID is allocated by the first device, and the first device notifies the second device of a correspondence between the allocated local ID and the third device. Therefore, after receiving the local ID in the first information, the second device may learn of the corresponding third device.

It may be understood that the information about the transmission resource and the first information may be carried in a same piece of signaling, or may be carried in different signaling. This is not limited.

The information about the transmission resource includes information about the first resource and information about the second resource. In an example, the information about the first resource and the information about the second resource may be carried in a same piece of signaling, or may be carried in different signaling. This is not limited.

It may be understood that, that the first device sends the information about the transmission resource to the second device may be understood as that the first device indicates the first resource and the second resource to the second device, that is, the second device learns of a time-frequency domain position of the first resource and a time-frequency domain position of the second resource.

For example, if the first resource is the SPS resource, the method 1300 further includes: The second device receives first DCI, and the second device determines a time domain position of the SPS resource based on the first DCI and information that is about the SPS resource and that is received in step 1320, where the first DCI is used to activate the SPS. Detailed descriptions are provided below with reference to a method 1500.

For another example, if the second resource is the CG resource, the second device determines a time domain position of the CG resource based on information that is about the CG resource and that is received in step 1320, or the method 1300 further includes: The second device receives second DCI, and the second device determines a time domain position of the CG resource based on the second DCI and information that is about the CG resource and that is received in step 1320, where the second DCI is used to activate the CG. Detailed descriptions are provided below with reference to a method 1500.

1330: The first device sends the data of the service #1 to the third device via the second device.

Correspondingly, the second device receives the data of the service #1 by using the first resource, and sends the data of the service #1 to the third device by using the second resource.

Based on this embodiment of this application, when the third device receives the data of the service #1 from the first device via the second device, the first device may jointly configure the transmission resource for the data. To be specific, the first device configures a resource used by the second device to receive the data from the first device and a resource used by the second device to send the data to the third device. An example in which the network device sends the data of the service #1 to the remote UE is used. The network device configures a resource used by the relay UE to receive the data from the network device, and the network device configures a resource used by the relay UE to forward the data to the remote UE. In this way, the first resource and the second resource that are jointly configured can be directly used to transmit the data, reducing a data transmission delay, and improving user experience.

Optionally, the first device configures the first resource and the second resource for the service #1 based on service information of the service #1.

The service information of the service #1 represents information that can reflect a feature of the service #1, or the information related to the service #1. In an example, the service information of the service #1 includes at least one piece of the following information: time sensitive communication assistance information (time sensitive communication assistance information, TSCAI) of the service #1, a maximum data burst volume (maximum data burst volume, MBDV) of the service #1, historical traffic information of the UE #1, and the like. Time sensitive communication may also be referred to as delay-sensitive communication, may support deterministic delay communication, and has a delay performance requirement and a communication requirement of high reliability and availability. In an example, the TSCAI of the service #1 includes, for example, at least one of the following: a data flow direction (that is, uplink or downlink) of the service #1, a data burst period of the service #1 (that is, a time gap between start moments of two burst data flows), and a latest possible time at which a 1^{st} data packet of a burst data flow of the service #1 arrives at the first device. The MBDV may be applied to the ultra-reliable and low latency communication (ultra-reliable and low latency communication, URLLC) service. In other words, if the service #1 is the URLLC service, the service information of the service #1 may include the MBDV, and the MBDV defines a maximum length of a data packet that can be transmitted over an air interface within a delay budget.

In a possible case, if the first device learns, based on the service information of the service #1, that the service #1 is a periodically transmitted service, the first device configures the first resource and the second resource for the service #1. In this case, the first device may first determine whether the service #1 is the periodically transmitted service. When the service #1 is the periodically transmitted service, the first device configures the first resource and the second resource for the service #1, to improve resource utilization.

In another possible case, if the first device learns, based on the service information of the service #1, that the service #1 is an emergency service (or a delay-sensitive service), for example, the service #1 is the ultra-reliable and low latency communication (ultra-reliable and low latency communication, URLLC), the first device configures the first resource and the second resource for the service #1. In this case, the first device may first determine whether the service #1 is the emergency service. When the service #1 is the emergency service, the first device configures the first resource and the second resource for the service #1, to meet a service requirement as much as possible.

It may be understood that the foregoing is an example for description, and this embodiment of this application is not limited thereto.

Optionally, the first device may obtain the service information of the service #1 in any one of the following manners.

In a first possible implementation, the first device receives the service information of the service #1 from a core network device (for example, an AMF).

Based on this implementation, the core network device may provide the service information of the service #1 for the first device, so that the first device determines whether to configure the first resource and the second resource for the service #1. For example, the core network device may provide the TSCAI of the service #1 and/or the MBDV of the service #1 for the first device. For another example, the service information that is of the service #1 and that is received by the first device from the core network device indicates that the service #1 is the periodically transmitted service, that is, the first device may directly learn from a core network that the service #1 is the periodically transmitted service, and in this case, the first device jointly configures the transmission resource for the service #1.

In an example, the first device may obtain the service information of the service #1 from the core network device (for example, the AMF) in a PDU session establishment process. For example, after the first device completes a UE context establishment procedure, the AMF sends a session establishment request to the first device, where a message may carry the following information: a PDU session list of the UE #1, a QoS flow list of each PDU session, a quality attribute of each QoS flow, and the like. QoS-related information may include information such as the TSCAI and the MDBV.

In a second possible implementation, the first device determines the service information of the service #1.

Based on this implementation, the first device may determine the service information of the service #1, so that the first device determines whether to configure the first resource and the second resource for the service #1. For example, the first device may determine the historical traffic information of the UE #1, and determine future downlink service information (that is, including the service information of the service #1) of the UE #1 with reference to some prediction methods.

The foregoing describes a solution related to the service #1. The following describes solutions related to the first resource and the second resource.

Optionally, a period (referred to as T1 for differentiation) of the first resource and a period (referred to as T2 for differentiation) of the second resource satisfy any one of the following forms.

Form 1: The period of the first resource is the same as the period of the second resource.

Based on this form, T1=T2.

In a possible case, T1=T2=*f₁*(T), where T represents the period of the service #1, and *f₁*() represents a function. For example, T1=T2=T. For another example, T1=T2=n*T, where n is an integer greater than 1. For example, n=2.

FIG. 14 is a diagram of an association relationship between the first resource and the second resource in time domain.

As shown in FIG. 14, the data of the service #1 is periodically transmitted. To be specific, the first device (or another terminal device) periodically sends the data of the service #1 to the third device, and the period is T. The period of the first resource in time domain is T, and the period of the second resource in time domain is also T.

Form 2: The period of the first resource is different from the period of the second resource.

Based on this form, T1≠T2.

In a possible case, T1=*f₂*(T2), where *f₂*() represents a function. For example, T1=m*T2, where m is a number greater than 0. For example, m=2. For another example, m=1/2.

In another possible case, T1=*f₃*(T), and T2=*f₄*(T), where T represents the period of the service #1, and *f₃*() and *f₄*() represent different functions. For example, T1=T, and T2=2T. For another example, T1=2T, and T2=T.

Optionally, a time domain start position of the first resource is later than the data arrival time of the service #1. Refer to FIG. 14. The data arrival time of the service #1 may indicate a time at which the first device obtains the data of the service #1. In this way, after receiving the data of the service #1 of the third device, the first device may have time to process the data by using a corresponding protocol stack. The time domain start position of the first resource is designed to be later than the data arrival time of the service #1, so that the first device may have sufficient time to process the data of the service #1.

In a possible case, a time gap between the time domain start position of the first resource and the data arrival time of the service #1 is greater than or equal to a first threshold. The first threshold may be estimated (or configured) by the first device, or may be predefined in a standard. This is not limited. For example, as shown in FIG. 14, a time gap t between the time domain start position of the first resource and the data arrival time of the service #1 is greater than or equal to the first threshold (for example, denoted as t1), where t1 is equal to a processing delay of the first device plus a transmission delay, or t1 is greater than a processing delay of the first device plus a transmission delay. The processing delay of the first device indicates a delay in processing the data of the service #1 by the first device. The transmission delay indicates a transmission delay in sending the data of the service #1 by the first device to the second device. In actual communication, the processing delay of the first device, the transmission delay, and the like are not necessarily fixed values. Therefore, to avoid a waste of resources, the first device may configure t to be greater than the estimated t1. It may be understood that t may alternatively be equal to t1. This is not limited.

Optionally, a time domain start position of the second resource is after the time domain start position of the first resource. Refer to FIG. 14. In this way, after receiving the data of the service #1 of the third device, the second device may have time to process the data by using a corresponding protocol stack. The time domain start position of the first resource is designed to be later than the data arrival time of the service #1, so that there can be sufficient time to process the data of the service #1 on a second device side.

In a possible case, a time gap between the time domain start position of the second resource and the time domain start position of the first resource is greater than or equal to a second threshold. The second threshold may be estimated (or configured) by the first device, or may be predefined in a standard. This is not limited. For example, as shown in FIG. 14, a time gap t' between the time domain start position of the second resource and the time domain start position of the first resource is greater than or equal to the second threshold (for example, denoted as t2), where t2 is equal to a processing delay of the second device plus a transmission delay, or t2 is greater than a processing delay of the second device plus a transmission delay. The processing delay of the second device indicates a delay in processing the data of the service #1 by the second device. The transmission delay indicates a transmission delay in sending the data of the service #1 by the second device to the third device. For example, to enable the first device to know the processing delay of the second device, the second device may first perform reporting. For example, the second device may actively perform reporting when accessing the first device or when being accessed by the third device. For another example, the second device may perform reporting based on a request of the first device. In actual communication, the processing delay of the second device, the transmission delay, and the like are not necessarily fixed values. Therefore, to avoid a waste of resources, the first device may configure t' to be greater than the estimated t2. It may be understood that t' may alternatively be equal to t2. This is not limited.

The foregoing describes some solutions related to the periods and relative positions of the first resource and the second resource. The following describes a related solution in which the first resource and the second resource are used to transmit the data of the service #1.

Optionally, a bearer corresponding to the service #1 has a correspondence (for example, denoted as a correspondence #1 (an example of a first correspondence)) with a logical channel #1 (an example of a first logical channel). In other words, data on the logical channel #1 is the bearer corresponding to the service #1. Further, optionally, the first device sends the correspondence #1 to the second device. The logical channel #1 is a corresponding logical channel for transmitting the data of the service #1 between the second device and the first device. The bearer corresponding to the service #1 may be, for example, a DRB corresponding to the service #1. An example in which the bearer corresponding to the service #1 is the DRB is mainly used below for description.

An example in which the first device is the network device is used. For example, a plurality of DRBs (the plurality of DRBs may be DRBs of a plurality of UEs) may be multiplexed to a Uu RLC bearer between the second device and the network device. In this case, the DRB corresponding to the service #1 and a DRB corresponding to another service may be on one logical channel, and when a MAC layer of the network device performs logical channel packet assembly, the network device may not be able to distinguish between data of different DRBs from the logical channel. As a result, the first resource cannot be dedicated to transmitting the data of the service #1. The following provides several possible implementations by using the example in which the first device is the network device.

In a first possible manner, the network device sends the data of the service #1 at a time domain position of the first resource (for example, a moment corresponding to the first resource).

For example, at the time domain position of the first resource, the network device delivers the DRB corresponding to the service #1 to a Uu RLC bearer corresponding to the DRB, and the MAC layer of the network device obtains the data of the service #1 from a logical channel corresponding to the Uu RLC bearer, assemblies the data into a packet, and delivers the packet, for example, delivers the packet to a bottom layer (that is, a physical layer). In this manner, the DRB corresponding to the service #1 is mapped to the Uu RLC bearer, and the network device sends data on the DRB at the time domain position of the first resource. Therefore, the first resource can be dedicated to transmitting the data of the service #1.

For another example, at the time domain position of the first resource (for example, the moment corresponding to the first resource), the network device sends the data of the service #1, and the network device does not send data on a DRB corresponding to another service that reuses a same Uu RLC bearer as the service #1. For example, at the time domain position corresponding to the first resource, the network device delivers data on the DRB corresponding to the service #1 to an AS layer, or delivers data on the DRB corresponding to the service #1 to the Uu RLC bearer, and the MAC layer of the network device obtains the data of the service #1 from a logical channel corresponding to the Uu RLC bearer, assemblies the data into a packet, and delivers the packet, for example, delivers the packet to a bottom layer (that is, a physical layer). In other words, at the time domain position corresponding to the first resource, the network device does not send the data on the DRB corresponding to the another service that reuses the same Uu RLC bearer as the service #1, that is, does not deliver the data on the DRB corresponding to the another service to the Uu RLC bearer. In addition, in this manner, DRB data on another Uu RLC bearer is allowed to be sent. Packet assembly is designed to be performed on logical channel data on a Uu RLC channel corresponding to the service #1 at a corresponding resource location, so that the first resource can be dedicated to transmitting the data of the service #1.

In a second possible manner, the DRB corresponding to the service #1 is mapped to a Uu RLC bearer, and the network device performs logical channel packet assembly on the Uu RLC bearer.

For example, the DRB corresponding to the service #1 corresponds to the Uu RLC bearer. When the network device sends the service #1, the network device delivers the DRB corresponding to the service #1 to the Uu RLC bearer corresponding to the DRB, and in addition, the MAC layer of the network device obtains the data of the service #1 from a logical channel corresponding to the Uu RLC bearer, assemblies the data into a packet, and delivers the packet, for example, delivers the packet to a bottom layer (that is, a physical layer). In other words, the DRB corresponding to the service #1 is mapped to the Uu RLC bearer, and a DRB corresponding to another service is not mapped to the Uu RLC bearer. Therefore, the network device does not deliver the DRB corresponding to the another service to the Uu RLC bearer corresponding to the service #1. In addition, the MAC layer of the network device obtains the data from the logical channel corresponding to the Uu RLC bearer (that is, the Uu RLC bearer corresponding to the service #1), to perform logical channel packet assembly, and thus does not perform logical channel packet assembly on data of the another service. In this manner, the network device performs, on the first resource, packet assembly the data on the logical channel corresponding to the Uu RLC bearer corresponding to the service #1. Therefore, the first resource can be dedicated to transmitting the data of the service #1.

In a third possible manner, the first resource is greater than or equal to a resource required for transmitting the data of the service #1 between the second device and the network device.

For example, when configuring the first resource, the network device configures a specific margin (as shown in FIG. 14), so that the first resource can be greater than a resource required by an amount of data generated in each burst of the service #1.

For example, a plurality of DRBs (the plurality of DRBs may be DRBs of a plurality of UEs) may be multiplexed to a Uu RLC bearer between the second device and the network device. In this case, the DRB corresponding to the service #1 and a DRB corresponding to another service may be on one logical channel. Because the first resource has the specific margin (that is, the first resource is greater than a resource required by the data of the service #1), the first resource can be used to transmit the data of the service #1, to ensure transmission performance for the data of the service #1 as much as possible.

The foregoing several implementations are examples for description, and this embodiment of this application is not limited thereto. Any solution in which the first resource can be dedicated to transmitting the data of the service #1 is applicable to this embodiment of this application.

Optionally, the second resource is greater than or equal to a resource required for transmitting the data of the service #1 between the second device and the third device. For example, when configuring the second resource, the first device configures a specific margin (as shown in FIG. 14), so that the second resource can be greater than a resource required by an amount of data generated in each burst of the service #1.

Optionally, the bearer corresponding to the service #1 has a correspondence (for example, denoted as a correspondence #2 (an example of a second correspondence)) with a logical channel #2 (an example of a second logical channel). The logical channel #2 is a corresponding logical channel for transmitting the data of the service #1 between the second device and the third device. Further, optionally, the first device further sends the correspondence #2 to the second device. The bearer corresponding to the service #1 may be, for example, the DRB corresponding to the service #1. Further, optionally, the first device sends the correspondence #2 to the second device. The correspondence #2 and the second resource may be transmitted by using a same piece of signaling (for example, carried in a same RRC reconfiguration message), or may be transmitted by using different signaling (for example, carried in different RRC reconfiguration messages). This is not limited.

Optionally, the first device sends the correspondence #1 and the correspondence #2 to the second device. For example, the first device configures the correspondence #1 and the correspondence #2, and sends the correspondence #1 and the correspondence #2 to the second device. Correspondingly, the second device receives the correspondence #1 and the correspondence #2. In this way, the second device may learn, based on the correspondence #1 and the correspondence #2, that there is a correspondence between the DRB corresponding to the service #1, the logical channel #1, and the logical channel #2, so that the data of the service #1 can be transmitted on the logical channel #1 and the logical channel #2.

For ease of understanding, the following describes a possible procedure by using an example in which a first device is a network device, a second device is a relay UE, and a third device is a remote UE. For details about related steps and terms, refer to the foregoing descriptions.

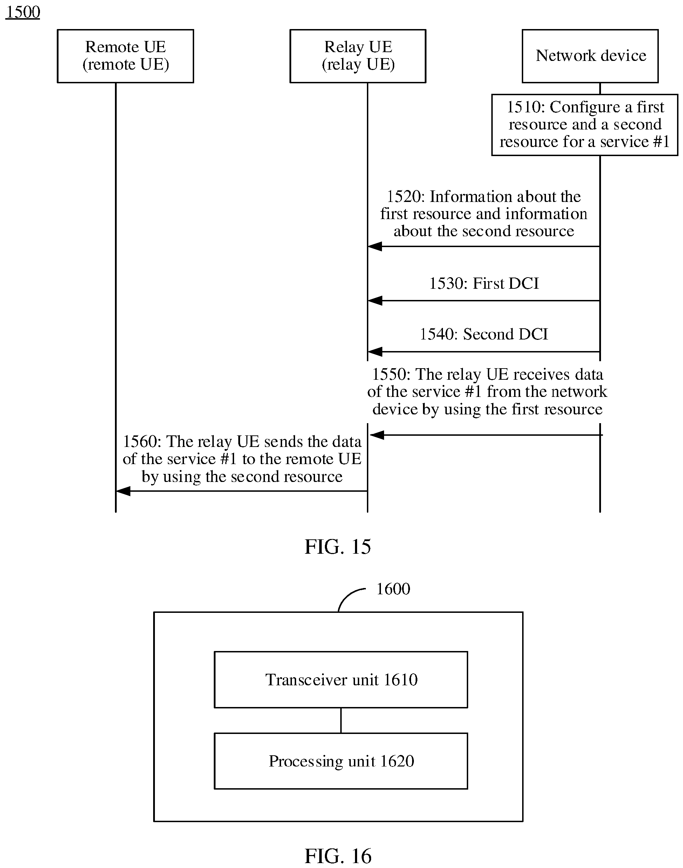

FIG. 15 is a diagram of the data transmission method 1500 according to an embodiment of this application. The method 1500 may be applicable to the foregoing method 1300. The method 1500 may include the following steps.

1510: The network device configures a first resource and a second resource for a service #1.

The first resource is used by the relay UE to receive data of the service #1 from the network device. In other words, the relay UE may receive the data of the service #1 from the network device by using the first resource. In an example, the first resource may be, for example, an SPS resource, that is, the first resource is a periodic transmission resource. For ease of understanding, the method 1500 is mainly described by using an example in which the first resource is the SPS resource.

The second resource is used by the relay UE to send the data of the service #1 to the remote UE. In other words, the relay UE may send the data of the service #1 to the remote UE by using the second resource. In an example, the second resource may be, for example, a CG resource (for example, the second resource is an SL CG resource), that is, the second resource is a periodic transmission resource. For ease of understanding, the method 1500 is mainly described by using an example in which the second resource is the CG resource.

Optionally, the network device determines, based on service information of the service #1, to configure the first resource and the second resource for the service #1. For example, the network device receives information related to the service #1 from a core network device (for example, an AMF), where the information related to the service #1 may be used to represent the service information of the service #1; and the network device determines, based on the information related to the service #1, to configure the first resource and the second resource for the service #1. For another example, the network device determines the service information of the service #1, and further determines to configure the first resource and the second resource for the service #1. For a specific solution, refer to related descriptions in the method 1300. Details are not described herein again.

Optionally, the network device configures the first resource and the second resource based on information about the service #1. For example, the network device configures a period of the first resource and a period the second resource based on a period of the service #1. For example, the period of the first resource and the period of the second resource are the same as the period of the service #1. Refer to FIG. 14. For another example, the network device configures a size of a time-frequency resource for the first resource and a size of a time-frequency resource for the second resource based on a maximum data burst volume of the service #1. For another example, the network device configures a time domain resource for the first resource and a time domain resource for the second resource based on a data arrival time of the service #1. For another example, the network device configures the first resource and the second resource for the service #1 based on QoS information of the service #1.

Optionally, the network device further sends first information to the relay UE, where the first information indicates that the second resource is used to transmit the data of the service #1. Because one relay UE may serve a plurality of remote UEs, the network device may further indicate, to the relay UE, that the second resource is used for service data transmission of a specific remote UE. In this way, the second resource can be used to transmit the data of the service #1. For details, refer to related descriptions in the method 1300. The details are not described herein again.

For solutions related to the first resource and the second resource, refer to descriptions in the method 1300. Details are not described herein again.

1520: The network device sends information about the first resource and information about the second resource to the relay UE.

In an example, the information about the first resource and the information about the second resource may be carried in a same piece of signaling, or may be carried in different signaling. This is not limited.

In an example, the information about the first resource and the information about the second resource are carried in an RRC message.

1530: The network device sends first DCI to the relay UE.

The first DCI may be used to activate the first resource. For example, if the first resource is the SPS resource, the network device sends the first DCI to the relay UE, where the first DCI is used to activate the SPS resource, so that the relay UE can receive the data of the service #1 by using the SPS resource. In a possible design, the first DCI may be DCI scrambled by a configured scheduling radio network temporary identifier (configured scheduling radio network temporary identifier, CS-RNTI).

An example in which the first resource is the SPS resource is used. A period of the SPS resource is determined by an SPS configuration of the network device. A start moment of the SPS resource may be determined based on the first DCI (for example, a system frame number and a slot number of the first DCI). Therefore, the relay UE may determine a time domain position of the SPS resource based on the first DCI and information that is about the SPS resource and that is received in step 1520. For example, a system frame (also referred to as a radio frame (radio frame)) is fixed to 10 milliseconds (ms), one system frame includes 10 subframes, and each subframe includes a specific quantity of slots, where a specific quantity of slots included may depend on a subcarrier spacing (subcarrier spacing, SCS). For example, when the SCS is 30 kilohertz (kHZ), one radio frame may include 20 slots.

It may be understood that if the first resource does not need to be activated, that is, the first resource may be directly used, the method 200 may not include step 1530.

1540: The network device sends second DCI to the relay UE.

The second DCI may be used to activate the second resource. For example, if the second resource is a CG type 2 resource, the network device sends the second DCI to the relay UE, where the second DCI is used to activate the CG type 2 resource, so that the relay UE can send the data of the service #1 to the remote UE by using the CG type 2 resource. In a possible design, the second DCI may be DCI scrambled by a sidelink configured scheduling radio network temporary identifier (sidelink configured scheduling radio network temporary identifier, SL-CS-RNTI).

An example in which the second resource is a CG resource is used. A period of the CG resource is determined by a CG configuration of the network device. A start moment of the CG resource may be determined based on the second DCI (for example, a delivery moment of the second DCI). Therefore, the relay UE may determine a location of the CG resource based on the second DCI and information that is about the CG resource and that is received in step 1520.

It may be understood that if the second resource does not need to be activated, that is, the second resource may be directly used, for example, the second resource is of a CG type 1, the method 200 may not include step 1540.

To implement a minimum data transmission delay, after receiving the data of the service #1 from a core network and processing the data, the network device may immediately send the data to the relay UE. In addition, after receiving the data of the service #1 and completing processing the data by using a protocol stack, the relay UE may immediately send the data of the service #1 to the remote UE. In other words, the data of the service #1 may not require an additional waiting delay at the network device and the relay UE. A delay of the data of the service #1 includes t1 and t2, where t1 is equal to a processing delay of the network device plus a transmission delay on a Uu link, and t2 is equal to a processing delay of the relay UE plus a transmission delay on an SL. The following uses an example in which the first resource is the SPS resource and the second resource is the CG resource for description.

To reduce a waiting delay of the data of the service #1 at the network device, the network device may estimate t1 based on an approximate time at which the data of the service #1 arrives at the network device, the processing delay of the network device, and the transmission delay on the Uu link, and adjust a sending moment of the first DCI used to activate the SPS resource. Therefore, after completing processing the data of the service #1, the network device can directly send the data of the service #1 to the relay UE on the SPS resource. In actual communication, the processing delay of the network device, the transmission delay, and the like are not necessarily fixed values. Therefore, to avoid a waste of resources, the network device may adjust the sending moment of the first DCI, to make a time gap between a start moment of an SPS resource location and arrival of the data at the network device greater than t1.

To reduce a waiting delay of the data at the relay UE, the network device may estimate t2, and then adjust a moment at which the first DCI used to activate the SPS resource is delivered and a moment at which the second DCI used to activate the GC type 2 resource is delivered (or adjust a moment at which the first DCI used to activate the SPS resource is delivered and a time domain resource configuration of the CG type 1), to make a time gap between the SPS resource and the CG resource equal to t2. In this way, after receiving and processing downlink data of the remote UE, the relay UE may directly transmit the downlink data on the SL without waiting. For example, to enable the network device to know the processing delay of the relay UE, the relay UE may first perform reporting. For example, the relay UE may actively perform reporting when accessing the network device or when being accessed by the remote UE. For another example, the relay UE may perform reporting based on a request of the network device. In actual communication, the processing delay of the relay UE, the transmission delay, and the like are not necessarily fixed values. Therefore, to avoid a waste of resources, the network device may configure the time gap between the SPS resource and the CG resource to be greater than the estimated t2.

1550: The relay UE receives the data of the service #1 from the network device by using the first resource. Correspondingly, the network device sends the data of the service #1 to the relay UE.

After receiving the data of the service #1 from the core network and completing processing the data, the network device sends the data of the service #1 to the relay UE. The relay UE receives the data of the service #1 by using the first resource. After receiving the data of the service #1 and processing the data of the service #1 by using the protocol stack, the relay UE may send the data of the service #1 to the remote UE by using the second resource.

In a possible case, a DRB corresponding to the service #1 has a correspondence (that is, a correspondence #1) with a logical channel #1. In other words, data on the logical channel #1 is the DRB corresponding to the service #1.

Optionally, the first resource is used to transmit the data of the service #1 in any one of the following manners.

In a first possible manner, the network device sends the data of the service #1 at a time domain position of the first resource (for example, a moment corresponding to the first resource).

In a second possible manner, the DRB corresponding to the service #1 is mapped to a Uu RLC bearer, and the network device performs logical channel packet assembly on the Uu RLC bearer.

In a third possible manner, the first resource is greater than or equal to a resource required for transmitting the data of the service #1 between the relay UE and the network device.

The foregoing several possible manners are simple descriptions. For details, refer to related descriptions in the method 1300. Details are not described herein again.

1560: The relay UE sends the data of the service #1 to the remote UE by using the second resource.

For example, a SRAP layer of the relay UE recognizes a local ID of the remote UE and a bearer identifier that are in a packet header of SRAP PDU data, and determines, based on a configuration of the network device, the remote UE to which the SRAP PDU data needs to be delivered and a PC5 relay RLC bearer corresponding to the remote UE. The relay UE recognizes, based on the received first information, that the previously configured second resource is dedicated to data transmission of the remote UE corresponding to the local ID, DRB data transmission of the remote UE, or data transmission on the PC5 relay RLC bearer for the remote UE. Therefore, when performing logical channel packet assembly, the relay UE obtains the data of the remote UE or data on the PC5 relay RLC bearer for the remote UE, assembles the data into a packet, and sends the packet to the remote UE by using the second resource.

When performing logical channel packet assembly, the relay UE generally obtains the data from a logical channel corresponding to the corresponding PC5 relay RLC bearer for packet assembly. Therefore, when a plurality of DRB bearers of the remote UE are multiplexed to the PC5 relay RLC bearer, the relay UE may not be able to distinguish between data on different DRB bearers. As a result, the configured second resource cannot be dedicated to the data of the service #1. To resolve the foregoing problem, the following several implementations may be included.

In a possible implementation, the PC5 relay RLC bearer is dedicated to the DRB corresponding to the service #1, and the relay UE performs, on the second resource, packet assembly on a logical channel corresponding to the PC5 relay RLC bearer.

For example, when determining a mapping relationship between a PC5 relay RLC bearer and a DRB bearer, the network device maps the DRB bearer corresponding to the service #1 to the PC5 relay RLC bearer. In other words, data on the DRB bearer sent on the first resource remains consistent with the DRB bearer multiplexed to the PC5 relay RLC bearer indicated in the second resource. In addition, the relay UE performs, on the second resource, packet assembly on data on the logical channel corresponding to the PC5 relay RLC bearer.

In another possible implementation, the relay UE delivers, on the second resource, the DRB of the service #1 to the corresponding PC5 relay RLC bearer, and performs packet assembly on a logical channel corresponding to the PC5 relay RLC bearer.

For example, the relay UE learns, based on the first information (for example, a DRB ID), that the second resource is used to transmit the DRB corresponding to the service #1. Therefore, the relay UE delivers, to the corresponding PC5 relay RLC bearer, data that is in the SRAP PDU packet header and that carries the DRB ID of the service #1. Data on another DRB mapped to the PC5 relay RLC bearer may temporarily not be delivered to the Uu RLC bearer. The relay UE performs, on the second resource, packet assembly on the data on the logical channel corresponding to the PC5 relay RLC bearer. In other words, the relay UE does not perform, on the second resource, logical channel packet assembly on data on a logical channel corresponding to another PC5 relay RLC bearer.

In another possible implementation, the relay UE may deliver the DRB data of the service 1 to the PC5 relay RLC bearer based on the first information. In other words, the relay UE may not deliver the DRB data of the another service to the PC5 relay RLC bearer.

In another possible implementation, the network device configures a specific margin for the second resource (as shown in FIG. 14), to ensure, as much as possible, that the data received by the relay UE on the first resource can be transmitted on the second resource.

Based on the foregoing technical solution, the network device configures the periodic first resource (for example, the SPS resource) and the periodic second resource (for example, the CG resource) for the relay UE based on a feature (for example, a periodic burst characteristic) of the service #1 of the remote UE, where the first resource and the second resource are used to transmit the service #1. The network device indicates, to the relay UE, that the configured first resource and the configured second resource are used to transmit the data of the service #1 of the remote UE, for example, indicates a bearer identifier corresponding to the data of the service #1. In this way, after receiving the data that is of the service #1 and that is sent by the network device, the relay UE may directly forward the data of the service #1 to the remote UE by using the second resource. Therefore, energy consumption required by the relay UE to request a resource and blindly detect dynamic resource scheduling DCI can be reduced. In addition, a location relationship between the first resource and the second resource is adjusted by controlling a moment for activating the first resource and/or a moment for activating the second resource (for example, controlling a moment for sending the first DCI and/or a moment for sending the second DCI), so that the waiting delay of the data of the service #1 at the network device and the relay UE can be further reduced, to reduce an end-to-end delay of the data of the service #1 as much as possible and meet a requirement of the service #1.

It may be understood that the example in FIG. 15 in embodiments of this application is merely intended to help a person skilled in the art understand embodiments of this application, but is not intended to limit embodiments of this application to a specific scenario in the example. A person skilled in the art may definitely make various equivalent modifications or changes according to the example shown in FIG. 15, and such modifications or changes also fall within the scope of embodiments of this application.

It may be further understood that in this embodiment of this application, an example in which the first device sends the data to the remote UE via the relay UE is used for description. It may be understood that the solution in this embodiment of this application may also be applied to a multi-hop relay scenario. For example, the first device sends the data to the remote UE via a plurality of relay UEs.

It may be further understood that in some of the foregoing embodiments, an example in which the network device sends the data to the remote UE via the relay UE is mainly used for description. It may be understood that a transmit end is not limited in the solution in this embodiment of this application. For example, the transmit end is a UE, and the transmit end UE sends the data to the remote UE via the relay UE. The transmit end UE, the relay UE, and the remote UE may be within coverage of a cell, or may be outside coverage of a cell. Alternatively, some of the transmit end UE, the relay UE, and the remote UE are within coverage of a cell, and some of the transmit end UE, the relay UE, and the remote UE are outside the coverage of the cell.

It may be further understood that a message name used in some of the foregoing embodiments is merely an example, and does not limit the protection scope of embodiments of this application.

It may be further understood that the formulas used in embodiments of this application are merely examples for description, and do not constitute a limitation on the protection scope of embodiments of this application. In a process in which the foregoing parameters are calculated, calculation may be performed according to the foregoing formulas, calculation may be performed based on variations of the foregoing formulas, or calculation may be performed in another manner, to satisfy a calculation result of the formulas.

It may be further understood that some optional features in embodiments of this application may be independent of other features in some scenarios, or may be combined with other features in some scenarios. This is not limited.

It may be further understood that the solutions in embodiments of this application may be appropriately combined for use, and explanations or descriptions of terms in embodiments may be mutually referenced or explained in embodiments. This is not limited.

It may be further understood that various numeric sequence numbers in embodiments of this application do not mean execution sequences, but are merely for differentiation for ease of description, and therefore should not constitute any limitation on an implementation process of embodiments of this application.

It may be further understood that in the foregoing method embodiments, methods and operations implemented by a device may alternatively be implemented by a component (for example, a chip or a circuit) of a device.

Corresponding to the methods provided in the foregoing method embodiments, an embodiment of this application further provides a corresponding apparatus. The apparatus includes a corresponding module configured to perform the foregoing method embodiments. The module may be software, hardware, or a combination of software and hardware. It may be understood that the technical features described in the foregoing method embodiments are also applicable to the following apparatus embodiments.

FIG. 16 is a diagram of a data transmission apparatus 1600 according to an embodiment of this application. The apparatus 1600 includes a transceiver unit 1610 and a processing unit 1620. The transceiver unit 1610 may be configured to implement a corresponding communication function. The transceiver unit 1610 may also be referred to as a communication interface or a communication unit. The processing unit 1620 may be configured to implement a corresponding processing function, for example, configure a resource.

Optionally, the apparatus 1600 further includes a storage unit. The storage unit may be configured to store instructions and/or data. The processing unit 1620 may read the instructions and/or the data in the storage unit, so that the apparatus implements actions of a device or a network element in the foregoing method embodiments.

In a first design, the apparatus 1600 may be the first device in the foregoing embodiments, or may be a component (for example, a chip) of the first device. The apparatus 1600 may implement steps or procedures performed by the first device in the foregoing method embodiments. The transceiver unit 1610 may be configured to perform receiving/sending-related operations of the first device in the foregoing method embodiments. The processing unit 1620 may be configured to perform processing-related operations of the first device in the foregoing method embodiments.

In a possible implementation, the transceiver unit 1610 is configured to send information about a transmission resource and first information to a second device, where the transmission resource includes a first resource and a second resource, the first resource is used by the second device to receive a first service from the first device, the second resource is used by a third device to receive the first service from the second device, the first information indicates that the second resource is used to transmit the first service, and the first service is a service of the third device. The transceiver unit 1610 is further configured to send data of the first service to the third device via the second device. Optionally, the processing unit 1620 is configured to determine the transmission resource.

Optionally, the first information includes a bearer identifier corresponding to the first service, and the bearer identifier corresponding to the first service indicates that the second resource is used to transmit the first service.

Optionally, the bearer identifier corresponding to the first service includes an identifier of a data radio bearer DRB corresponding to the first service, or an identifier of a PC5 radio link control RLC bearer corresponding to a DRB corresponding to the first service.

Optionally, the first information includes an identifier of the third device, and the identifier of the third device indicates the second device to transmit the first service to the third device by using the second resource.

Optionally, the first service is a periodically transmitted service, a period of the first resource is the same as a period of the first service, and/or a period of the second resource is the same as a period of the first service.

Optionally, the period of the first resource is the same as the period of the second resource.

Optionally, a bearer corresponding to the first service has a first correspondence with a first logical channel, and the first logical channel is a corresponding logical channel for transmitting the data of the first service between the second device and the first device.

Optionally, the bearer corresponding to the first service has a second correspondence with a second logical channel, and the second logical channel is a corresponding logical channel for transmitting first data between the second device and the third device.

Optionally, the first resource is greater than or equal to a resource required for transmitting the first data between the second device and the first device; and/or the second resource is greater than or equal to a resource required for transmitting the first data between the second device and the third device.

Optionally, a time gap between a time domain start position of the first resource and a first moment is greater than or equal to a first threshold, and the first moment indicates a moment at which the first data arrives at the first device; and/or a time gap between a time domain start position of the first resource and a time domain start position of the second resource is greater than or equal to a second threshold.

Optionally, the first resource is a semi-persistent scheduling SPS resource, and/or the second resource is a sidelink configured grant SL CG resource.

In a second design, the apparatus 1600 may be the second device (for example, the second device in FIG. 13, or for another example, the relay UE in FIG. 15) in the foregoing embodiments, or may be a component (for example, a chip) of the second device. The apparatus 1600 may implement steps or procedures performed by the second device in the foregoing method embodiments. The transceiver unit 1610 may be configured to perform receiving/sending-related operations of the second device in the foregoing method embodiments. The processing unit 1620 may be configured to perform processing-related operations of the second device in the foregoing method embodiments.

In a possible implementation, the transceiver unit 1610 is configured to receive information about a transmission resource and first information from a first device, where the transmission resource includes a first resource and a second resource, the first resource is used by the second device to receive a first service from the first device, the second resource is used by a third device to receive the first service from the second device, the first information indicates that the second resource is used to transmit the first service, and the first service is a service of the third device. The transceiver unit 1610 is further configured to receive data of the first service from the first device by using the first resource. The transceiver unit 1610 is further configured to send the data of the first service to the third device by using the second resource.

Optionally, the first information includes a bearer identifier corresponding to the first service, and the bearer identifier corresponding to the first service indicates that the second resource is used to transmit the first service.

Optionally, the bearer identifier corresponding to the first service includes an identifier of a data radio bearer DRB corresponding to the first service, or an identifier of a PC5 radio link control RLC bearer corresponding to a DRB corresponding to the first service.

Optionally, the first information includes an identifier of the third device, and the identifier of the third device indicates the second device to transmit the first service to the third device by using the second resource.

Optionally, the first service is a periodically transmitted service, a period of the first resource is the same as a period of the first service, and/or a period of the second resource is the same as a period of the first service.

Optionally, the period of the first resource is the same as the period of the second resource.

Optionally, a bearer corresponding to the first service has a first correspondence with a first logical channel, and the first logical channel is a corresponding logical channel for transmitting the data of the first service between the second device and the first device.

Optionally, the bearer corresponding to the first service has a second correspondence with a second logical channel, and the second logical channel is a corresponding logical channel for transmitting first data between the second device and the third device.

Optionally, the first resource is greater than or equal to a resource required for transmitting the first data between the second device and the first device; and/or the second resource is greater than or equal to a resource required for transmitting the first data between the second device and the third device.

Optionally, a time gap between a time domain start position of the first resource and a first moment is greater than or equal to a first threshold, and the first moment indicates a moment at which the first data arrives at the first device; and/or a time gap between a time domain start position of the first resource and a time domain start position of the second resource is greater than or equal to a second threshold.

Optionally, the first resource is a semi-persistent scheduling SPS resource, and/or the second resource is a sidelink configured grant SL CG resource.

It should be understood that a specific process in which the units perform the foregoing corresponding steps is described in detail in the foregoing method embodiments. For brevity, details are not described herein.

It should be understood that the apparatus 1600 herein is embodied in a form of a functional unit. The term "unit" herein may be an application-specific integrated circuit (application-specific integrated circuit, ASIC), an electronic circuit, a processor (for example, a shared processor, a dedicated processor, or a group processor) configured to execute one or more software or firmware programs, a memory, a combinational logic circuit, and/or another suitable component that supports the described functions. In an optional example, a person skilled in the art may understand that the apparatus 1600 may be specifically the first device in the foregoing embodiments, and may be configured to perform procedures and/or steps corresponding to the first device in the foregoing method embodiments. Alternatively, the apparatus 1600 may be specifically the second device in the foregoing embodiments, and may be configured to perform procedures and/or steps corresponding to the second device in the foregoing method embodiments. To avoid repetition, details are not described herein again.

The apparatus 1600 in the foregoing solutions has a function of implementing corresponding steps performed by a device (for example, the first device, or for another example, the second device) in the foregoing methods. The function may be implemented by hardware, or may be implemented by hardware executing corresponding software. The hardware or the software includes one or more modules corresponding to the foregoing function. For example, the transceiver unit may be replaced with a transceiver (for example, a sending unit in the transceiver unit may be replaced with a transmitter, and a receiving unit in the transceiver unit may be replaced with a receiver), and another unit, for example, the processing unit, may be replaced with a processor, to separately perform a sending and receiving operation and a related processing operation in the method embodiments.

In addition, the transceiver unit 1610 may alternatively be a transceiver circuit (for example, may include a receiving circuit and a sending circuit), and the processing unit may be a processing circuit.

It should be noted that the apparatus in FIG. 16 may be a network element or a device in the foregoing embodiments, or may be a chip or a chip system, for example, a system on chip (system on chip, SoC). The transceiver unit may be an input/output circuit or a communication interface. The processing unit is a processor, a microprocessor, or an integrated circuit integrated on the chip. This is not limited herein.

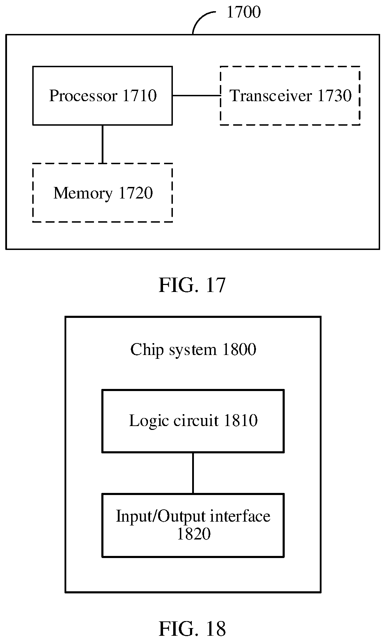

FIG. 17 is a diagram of another communication apparatus 1700 according to an embodiment of this application. The apparatus 1700 includes a processor 1710. The processor 1710 is configured to execute a computer program or instructions stored in a memory 1720, or read data/signaling stored in a memory 1720, to perform the methods in the foregoing method embodiments. Optionally, there are one or more processors 1710.

Optionally, as shown in FIG. 17, the apparatus 1700 further includes the memory 1720. The memory 1720 is configured to store the computer program or the instructions and/or the data. The memory 1720 may be integrated with the processor 1710, or may be disposed separately. Optionally, there are one or more memories 1720.

Optionally, as shown in FIG. 17, the apparatus 1700 further includes a transceiver 1730. The transceiver 1730 is configured to receive and/or send a signal. For example, the processor 1710 is configured to control the transceiver 1730 to receive and/or send the signal.

In a solution, the apparatus 1700 is configured to implement operations performed by the first device in the foregoing method embodiments.

For example, the processor 1710 is configured to execute the computer program or the instructions stored in the memory 1720, to implement related operations of the first device in the foregoing method embodiments.

In another solution, the apparatus 1700 is configured to implement operations performed by the second device in the foregoing method embodiments.

For example, the processor 1710 is configured to execute the computer program or the instructions stored in the memory 1720, to implement related operations of the second device in the foregoing method embodiments, for example, the method performed by the second device in the embodiment shown in FIG. 13, or the method performed by the relay UE in FIG. 15.

It should be understood that the processor mentioned in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, a discrete hardware component, or the like. The general-purpose processor may be a microprocessor, or the processor may be any conventional processor or the like.

It should be further understood that the memory mentioned in embodiments of this application may be a volatile memory and/or a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM). For example, the RAM may be used as an external cache. By way of example, and not limitation, the RAM includes a plurality of forms below: a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synchlink DRAM, SLDRAM), and a direct rambus random access memory (direct rambus RAM, DR RAM).

It should be noted that when the processor is a general-purpose processor, a DSP, an ASIC, an FPGA or another programmable logic device, a discrete gate or a transistor logic device, or a discrete hardware component, the memory (storage module) may be integrated into the processor.

It should be further noted that the memory described herein is intended to include but is not limited to these and any other appropriate type of memory.

FIG. 18 is a diagram of a chip system 1800 according to an embodiment of this application. The chip system 1800 (or may also be referred to as a processing system) includes a logic circuit 1810 and an input/output interface (input/output interface) 1820.

The logic circuit 1810 may be a processing circuit in the chip system 1800. The logic circuit 1810 may be coupled and connected to a storage unit, and invoke instructions in the storage unit, so that the chip system 1800 can implement the methods and functions in embodiments of this application. The input/output interface 1820 may be an input/output circuit in the chip system 1800, and outputs information processed by the chip system 1800, or inputs to-be-processed data or signaling information to the chip system 1800 for processing.

Specifically, for example, if the chip system 1800 is installed on a first device, the logic circuit 1810 is coupled to the input/output interface 1820, and the logic circuit 1810 may send a first resource and a second resource through the input/output interface 1820, where the first resource and the second resource may be configured by the logic circuit 1810; or the input/output interface 1820 may input related information of a first service to the logic circuit 1810 for processing. For another example, if the chip system 1800 is installed on a second device, the logic circuit 1810 is coupled to the input/output interface 1820, and the logic circuit 1810 may receive a first resource and a second resource through the input/output interface 1820.

In a solution, the chip system 1800 is configured to implement operations performed by the first device in the foregoing method embodiments.

For example, the logic circuit 1810 is configured to implement processing-related operations performed by the first device in the foregoing method embodiments, and the input/output interface 1820 is configured to implement sending- and/or receiving-related operations performed by the first device in the foregoing method embodiments.

In another solution, the chip system 1800 is configured to implement operations performed by the second device in the foregoing method embodiments.

For example, the logic circuit 1810 is configured to implement processing-related operations performed by the second device in the foregoing method embodiments, for example, processing-related operations performed by the second device in the embodiment shown in FIG. 13, or processing-related operations performed by the relay UE in the embodiment shown in FIG. 15. The input/output interface 1820 is configured to implement sending- and/or receiving-related operations performed by the second device in the foregoing method embodiments, for example, sending- and/or receiving-related operations performed by the second device in the embodiment shown in FIG. 13, or sending- and/or receiving-related operations performed by the relay UE in the embodiment shown in FIG. 15.

An embodiment of this application further provides a computer-readable storage medium. The computer-readable storage medium stores computer instructions for implementing the methods performed by a device in the foregoing method embodiments.

For example, when a computer program is executed by a computer, the computer is enabled to implement the method performed by the first device in the foregoing method embodiments.

For another example, when a computer program is executed by a computer, the computer is enabled to implement the method performed by the second device in the foregoing method embodiments.

An embodiment of this application further provides a computer program product, including instructions. When the instructions are executed by a computer, the method performed by a device (for example, the second device, or for another example, the first device) in the foregoing method embodiments is implemented.

An embodiment of this application further provides a communication system, including the foregoing second device and first device. Optionally, the system further includes a device that communicates with the foregoing terminal device and/or first device.

For explanations and beneficial effects of related content in any one of the apparatuses provided above, refer to the corresponding method embodiment provided above. Details are not described herein again.

In the several embodiments provided in this application, it should be understood that the disclosed apparatus and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or other forms.

All or some of the foregoing embodiments may be implemented by software, hardware, firmware, or any combination thereof. When software is used to implement the embodiments, all or a part of the embodiments may be implemented in a form of a computer program product. The computer program product includes one or more computer instructions. When the computer program instructions are loaded and executed on a computer, the procedure or functions according to embodiments of this application are all or partially generated. The computer may be a general-purpose computer, a dedicated computer, a computer network, or another programmable apparatus. For example, the computer may be a personal computer, a server, or a network device. The computer instructions may be stored in a computer-readable storage medium, or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid state disk (solid state disk, SSD)), or the like. For example, the usable medium may include but is not limited to any medium that can store program code, for example, a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. All variations or replacements readily figured out by a person skilled in the art within the technical scope disclosed in this application shall fall within the protection scope of this application. Therefore, the protection scope of this application shall be subject to the protection scope of the claims.

## Claims

1. A data transmission method, comprising:
sending, by a first device, information about a transmission resource and first information to a second device, wherein the transmission resource comprises a first resource and a second resource, the first resource is used by the second device to receive a first service from the first device, the second resource is used by third device to receive the first service from the second device, the first information indicates that the second resource is used to transmit the first service, and the first service is a service of the third device; and
sending, by the first device, data of the first service to the third device via the second device.

2. The method according to claim 1, wherein
the first information comprises a bearer identifier corresponding to the first service, and the bearer identifier corresponding to the first service indicates that the second resource is used to transmit the first service.

3. The method according to claim 2, wherein the bearer identifier corresponding to the first service comprises an identifier of a data radio bearer DRB corresponding to the first service, or an identifier of a PC5 radio link control RLC bearer corresponding to a DRB corresponding to the first service.

4. The method according to any one of claims 1 to 3, wherein the first information comprises an identifier of the third device, and the identifier of the third device indicates the second device to transmit the first service to the third device by using the second resource.

5. The method according to any one of claims 1 to 4, wherein the first service is a periodically transmitted service; and
a period of the first resource is the same as a period of the first service, and/or a period of the second resource is the same as a period of the first service.

6. The method according to any one of claims 1 to 5, wherein the period of the first resource is the same as the period of the second resource.

7. The method according to any one of claims 1 to 6, wherein a bearer corresponding to the first service has a first correspondence with a first logical channel, and the first logical channel is a corresponding logical channel for transmitting the data of the first service between the second device and the first device.

8. The method according to any one of claims 1 to 7, wherein the bearer corresponding to the first service has a second correspondence with a second logical channel, and the second logical channel is a corresponding logical channel for transmitting first data between the second device and the third device.

9. The method according to any one of claims 1 to 8, wherein
the first resource is greater than or equal to a resource required for transmitting the first data between the second device and the first device; and/or
the second resource is greater than or equal to a resource required for transmitting the first data between the second device and the third device.

10. The method according to any one of claims 1 to 9, wherein
a time gap between a time domain start position of the first resource and a first moment is greater than or equal to a first threshold, and the first moment indicates a moment at which the first data arrives at the first device; and/or
a time gap between a time domain start position of the first resource and a time domain start position of the second resource is greater than or equal to a second threshold.

11. The method according to any one of claims 1 to 10, wherein the first resource is a semi-persistent scheduling SPS resource, and/or the second resource is a sidelink configured grant SL CG resource.

12. A data transmission method, comprising:
receiving, by a second device, information about a transmission resource and first information from a first device, wherein the transmission resource comprises a first resource and a second resource, the first resource is used by the second device to receive a first service from the first device, the second resource is used by a third device to receive the first service from the second device, the first information indicates that the second resource is used to transmit the first service, and the first service is a service of the third device;
receiving, by the second device, data of the first service from the first device by using the first resource; and
sending, by the second device, the data of the first service to the third device by using the second resource.

13. The method according to claim 12, wherein
the first information comprises a bearer identifier corresponding to the first service, and the bearer identifier corresponding to the first service indicates that the second resource is used to transmit the first service.

14. The method according to claim 13, wherein the bearer identifier corresponding to the first service comprises an identifier of a data radio bearer DRB corresponding to the first service, or an identifier of a PC5 radio link control RLC bearer corresponding to a DRB corresponding to the first service.

15. The method according to any one of claims 12 to 14, wherein the first information comprises an identifier of the third device, and the identifier of the third device indicates the second device to transmit the first service to the third device by using the second resource.

16. The method according to any one of claims 12 to 15, wherein the first service is a periodically transmitted service; and
a period of the first resource is the same as a period of the first service, and/or a period of the second resource is the same as a period of the first service.

17. The method according to any one of claims 12 to 16, wherein the period of the first resource is the same as the period of the second resource.

18. The method according to any one of claims 12 to 17, wherein a bearer corresponding to the first service has a first correspondence with a first logical channel, and the first logical channel is a corresponding logical channel for transmitting the data of the first service between the second device and the first device.

19. The method according to any one of claims 12 to 18, wherein the bearer corresponding to the first service has a second correspondence with a second logical channel, and the second logical channel is a corresponding logical channel for transmitting first data between the second device and the third device.

20. The method according to any one of claims 12 to 19, wherein
the first resource is greater than or equal to a resource required for transmitting the first data between the second device and the first device; and/or
the second resource is greater than or equal to a resource required for transmitting the first data between the second device and the third device.

21. The method according to any one of claims 12 to 20, wherein
a time gap between a time domain start position of the first resource and a first moment is greater than or equal to a first threshold, and the first moment indicates a moment at which the first data arrives at the first device; and/or
a time gap between a time domain start position of the first resource and a time domain start position of the second resource is greater than or equal to a second threshold.

22. The method according to any one of claims 12 to 21, wherein the first resource is a semi-persistent scheduling SPS resource, and/or the second resource is a sidelink configured grant SL CG resource.

23. A communication apparatus, comprising:
a transceiver unit, configured to send information about a transmission resource and first information to a second device, wherein the transmission resource comprises a first resource and a second resource, the first resource is used by the second device to receive a first service from the communication apparatus, the second resource is used by a third device to receive the first service from the second device, the first information indicates that the second resource is used to transmit the first service, and the first service is a service of the third device, wherein
the transceiver unit is further configured to send data of the first service to the third device via the second device.

24. The communication apparatus according to claim 23, wherein the first information comprises a bearer identifier corresponding to the first service, and the bearer identifier corresponding to the first service indicates that the second resource is used to transmit the first service.

25. The communication apparatus according to claim 24, wherein the bearer identifier corresponding to the first service comprises an identifier of a data radio bearer DRB corresponding to the first service, or an identifier of a PC5 radio link control RLC bearer corresponding to a DRB corresponding to the first service.

26. The communication apparatus according to any one of claims 23 to 25, wherein the first information comprises an identifier of the third device, and the identifier of the third device indicates the second device to transmit the first service to the third device by using the second resource.

27. The communication apparatus according to any one of claims 23 to 26, wherein the first service is a periodically transmitted service; and
a period of the first resource is the same as a period of the first service, and/or a period of the second resource is the same as a period of the first service.

28. The communication apparatus according to any one of claims 23 to 27, wherein the period of the first resource is the same as the period of the second resource.

29. The communication apparatus according to any one of claims 23 to 28, wherein a bearer corresponding to the first service has a first correspondence with a first logical channel, and the first logical channel is a corresponding logical channel for transmitting the data of the first service between the second device and the communication apparatus.

30. The communication apparatus according to any one of claims 23 to 29, wherein the bearer corresponding to the first service has a second correspondence with a second logical channel, and the second logical channel is a corresponding logical channel for transmitting first data between the second device and the third device.

31. The communication apparatus according to any one of claims 23 to 30, wherein the first resource is greater than or equal to a resource required for transmitting the first data between the second device and the communication apparatus; and/or
the second resource is greater than or equal to a resource required for transmitting the first data between the second device and the third device.

32. The communication apparatus according to any one of claims 23 to 31, wherein a time gap between a time domain start position of the first resource and a first moment is greater than or equal to a first threshold, and the first moment indicates a moment at which the first data arrives at the first device; and/or
a time gap between a time domain start position of the first resource and a time domain start position of the second resource is greater than or equal to a second threshold.

33. The communication apparatus according to any one of claims 23 to 32, wherein the first resource is a semi-persistent scheduling SPS resource, and/or the second resource is a sidelink configured grant SL CG resource.

34. A communication apparatus, comprising:
a transceiver unit, configured to receive information about a transmission resource and first information from a first device, wherein the transmission resource comprises a first resource and a second resource, the first resource is used by the communication apparatus to receive a first service from the first device, the second resource is used by a third device to receive the first service from the communication apparatus, the first information indicates that the second resource is used to transmit the first service, and the first service is a service of the third device, wherein
the transceiver unit is further configured to receive data of the first service from the first device by using the first resource; and
the transceiver unit is further configured to send the data of the first service to the third device by using the second resource.

35. The communication apparatus according to claim 34, wherein the first information comprises a bearer identifier corresponding to the first service, and the bearer identifier corresponding to the first service indicates that the second resource is used to transmit the first service.

36. The communication apparatus according to claim 35, wherein the bearer identifier corresponding to the first service comprises an identifier of a data radio bearer DRB corresponding to the first service, or an identifier of a PC5 radio link control RLC bearer corresponding to a DRB corresponding to the first service.

37. The communication apparatus according to any one of claims 34 to 36, wherein the first information comprises an identifier of the third device, and the identifier of the third device indicates the communication apparatus to transmit the first service to the third device by using the second resource.

38. The communication apparatus according to any one of claims 34 to 37, wherein the first service is a periodically transmitted service; and
a period of the first resource is the same as a period of the first service, and/or a period of the second resource is the same as a period of the first service.

39. The communication apparatus according to any one of claims 34 to 38, wherein the period of the first resource is the same as the period of the second resource.

40. The communication apparatus according to any one of claims 34 to 39, wherein a bearer corresponding to the first service has a first correspondence with a first logical channel, and the first logical channel is a corresponding logical channel for transmitting the data of the first service between the communication apparatus and the first device.

41. The communication apparatus according to any one of claims 34 to 40, wherein the bearer corresponding to the first service has a second correspondence with a second logical channel, and the second logical channel is a corresponding logical channel for transmitting first data between the communication apparatus and the third device.

42. The communication apparatus according to any one of claims 34 to 41, wherein the first resource is greater than or equal to a resource required for transmitting the first data between the communication apparatus and the first device; and/or
the second resource is greater than or equal to a resource required for transmitting the first data between the communication apparatus and the third device.

43. The communication apparatus according to any one of claims 34 to 42, wherein a time gap between a time domain start position of the first resource and a first moment is greater than or equal to a first threshold, and the first moment indicates a moment at which the first data arrives at the first device; and/or
a time gap between a time domain start position of the first resource and a time domain start position of the second resource is greater than or equal to a second threshold.

44. The communication apparatus according to any one of claims 34 to 43, wherein the first resource is a semi-persistent scheduling SPS resource, and/or the second resource is a sidelink configured grant SL CG resource.

45. A chip, wherein the chip comprises a processor and a communication interface; the communication interface is configured to receive a signal and transmit the signal to the processor; and the processor processes the signal, to perform the method according to any one of claims 1 to 11 or the method according to any one of claims 12 to 22.

46. A communication apparatus, comprising:
a processor, configured to execute a computer program stored in a memory, so that the apparatus performs the method according to any one of claims 1 to 11 or the method according to any one of claims 12 to 22.

47. The apparatus according to claim 46, wherein the apparatus further comprises the memory.

48. A computer-readable storage medium, wherein the computer-readable storage medium stores a computer program, and when the computer program is run on a computer, the computer is enabled to perform the method according to any one of claims 1 to 11 the method according to any one of claims 12 to 22.

49. A computer program product, wherein the computer program product comprises instructions used to perform the method according to any one of claims 1 to 11 or the method according to any one of claims 12 to 22.

50. A communication system, comprising a first device and a second device, wherein
the first device is configured to perform the method according to any one of claims 1 to 11, and the second device is configured to perform the method according to any one of claims 12 to 22.

51. The system according to claim 50, wherein the system further comprises a third device, and the third device is configured to communicate with the second device.
